# EUROPEAN PATENT APPLICATION

(11) **EP 4 804 642 A1**
(43) Date of publication of application: **09.09.2026**
(21) Application number: 24886249.2
(22) Date of filing: 30.10.2024
(51) Int. Cl.: H04W 52/02, H04W 76/28, H04W 72/23, H04W 36/36

(54) **METHOD AND APPARATUS FOR TRANSMITTING AND RECEIVING WIRELESS SIGNALS IN WIRELESS COMMUNICATION SYSTEM**

(30) Priority: 01.11.2023 KR 20230149396
(71) Applicant: LG Electronics Inc., Yeongdeungpo-gu Seoul 07336 (KR)
(72) Inventor: MYUNG, Sechang, Seoul 06772 (KR); YANG, Suckchel, Seoul 06772 (KR); KIM, Seonwook, Seoul 06772 (KR)
(74) Representative: Mooser, Sebastian Thomas
(86) International application number: PCT/KR2024/016808
(87) International publication number: WO 2025/095577

(57) **Abstract**

A method by which a terminal monitors signals in a wireless communication system, and an apparatus therefor, according to various embodiments, are disclosed. Disclosed is the method and the apparatus, the method comprising the steps of: receiving, from a base station, configuration information for connected mode discontinuous reception (C-DRX); detecting first downlink control information (DCI) including wake-up indication information; and determining, on the basis of the detection result of the first DCI, whether to monitor second DCI related to cell discontinuous transmission (DTX) or cell DRX in an inactive time interval configured through the configuration information.

## Description

### TECHNICAL FIELD

The present disclosure relates to a wireless communication system, and more particularly, to a method and apparatus for transmitting and receiving a wireless signal.

### BACKGROUND

Wireless communication systems are widely deployed to provide various kinds of communication services such as voice and data. In general, wireless communication systems are multiple access systems that can support communication with multiple users by sharing available system resources (bandwidth, transmission power, etc.). Examples of multiple access systems include code division multiple access (CDMA) systems, frequency division multiple access (FDMA) systems, time division multiple access (TDMA) systems, orthogonal frequency division multiple access (OFDMA) systems, and single carrier frequency division multiple access (SC-FDMA) systems.

As more and more communication devices demand larger communication traffic along with the current trends, a future-generation 5th generation (5G) system is required to provide an enhanced wireless broadband communication, compared to the legacy LTE system. In the future-generation 5G system, communication scenarios are divided into enhanced mobile broadband (eMBB), ultra-reliability and low-latency communication (URLLC), massive machine-type communication (mMTC), and so on.

Herein, eMBB is a future-generation mobile communication scenario characterized by high spectral efficiency, high user experienced data rate, and high peak data rate, URLLC is a future-generation mobile communication scenario characterized by ultra-high reliability, ultra-low latency, and ultra-high availability (e.g., vehicle to everything (V2X), emergency service, and remote control), and mMTC is a future-generation mobile communication scenario characterized by low cost, low energy, short packet, and massive connectivity (e.g., Internet of things (IoT)).

### DISCLOSURE

### TECHNICAL PROBLEM

An object of the present disclosure is to provide a method and apparatus for transmitting and receiving a signal more accurately and efficiently.

It will be appreciated by persons skilled in the art that the objects that could be achieved with the various embodiments of the present disclosure are not limited to what has been particularly described hereinabove and the above and other objects that the various embodiments of the present disclosure could achieve will be more clearly understood from the following detailed description.

### TECHNICAL SOLUTION

According to an aspect, a method for receiving a signal by a user equipment (UE) may include receiving configuration information for connected mode discontinuous reception (C-DRX) from a base station (BS), detecting first downlink control information (DCI) including wake-up indication information, and based on a result of detecting the first DCI, determining whether to monitor second DCI related to cell DRX or cell discontinuous transmission (DTX) in an inactive period configured through the configuration information.

Alternatively, based on a wake-up operation being performed as a preset default operation due to non-detection of the first DCI, the monitoring of the second DCI may be performed in the inactive period.

Alternatively, based on a sleep operation being performed as a preset default operation due to non-detection of the first DCI, the monitoring of the second DCI may not be performed in the inactive period.

Alternatively, based on the first DCI including the wake-up indication information having a bit value related to wake-up being detected, the monitoring of the second DCI may be performed in the inactive period.

Alternatively, based on the first DCI including the wake-up indication information having a bit value related to sleep being detected, the monitoring of the second DCI may not be performed in the inactive period.

Alternatively, the monitoring of the second DCI may be performed only in an onDuration for which sleep is indicated by the first DCI.

Alternatively, the wake-up indication information may include a first bit value indicating starting of a drx-onDurationTimer for a next DRX cycle or a second bit value indicating that the drx-onDurationTimer for the next DRX cycle does not start.

Alternatively, the second DCI format may further include a conditional handover (CHO) triggering bit indicating whether to trigger CHO.

Alternatively, the first DCI may be DCI format 2_6, and the second DCI may be DCI format 2_9.

According to another aspect, a computer-readable recording medium recording a program for performing the above method for receiving a signal may be provided.

According to another aspect, a UE for performing the above method for receiving a signal may be provided.

According to another aspect, a processing device for controlling a UE that performs the above method for receiving a signal may be provided.

According to another aspect, a method for transmitting a signal by a BS may include transmitting configuration information for connected mode discontinuous reception (C-DRX) to a UE), and based on whether first DCI including wake-up indication information is transmitted, determining whether to transmit second DCI related to cell DRX or cell DTX in an inactive period configured for the UE through the configuration information.

### ADVANTAGEOUS EFFECTS

According to an embodiment of the present disclosure, a signal may be transmitted or received more accurately and efficiently in a wireless communication system.

Alternatively, the power consumption of a network and/or a user equipment (UE) may be controlled more efficiently in a wireless communication system.

Effects to be achieved by embodiment(s) are not limited to what has been particularly described hereinabove and other effects not mentioned herein will be more clearly understood by persons skilled in the art to which embodiment(s) pertain from the following detailed description.

### BRIEF DESCRIPTION OF THE DRAWINGS

The accompanying drawings, which are included to provide a further understanding of the disclosure and are incorporated in and constitute a part of this application, illustrate embodiments of the disclosure and together with the description serve to explain the principle of the disclosure.
FIG. 1 is a diagram to illustrate the physical channels utilized in the 3GPP NR system and a typical signal transmission method using them.
FIG. 2 illustrates the structure of a NR radio frame to which the present disclosure is applicable.
FIG. 3 illustrates the slot structure of a NR frame to which the present disclosure is applicable.
FIG. 4 is a diagram illustrating exemplary mapping of physical channels in a slot, to which the embodiment is applicable.
FIGs. 5 and 6 are diagrams for explaining a idle mode discontinuous reception (DRX) operation;
FIGS. 7 to 9 are diagrams for explaining a DRX operation in a radio resource control (RRC) connected mode;
FIG. 10 is a diagram for explaining a method of monitoring DCI format 2_6.
FIG. 11 is a diagram illustrating a method for monitoring second DCI by a user equipment (UE).
FIG. 12 is a diagram illustrating a method for transmitting second DCI to a UE by a base station (BS).
FIGs. 13 to 16 illustrate a communication system 1 and a wireless device applicable to the present disclosure.

### DETAILED DESCRIPTION

Embodiments of the present disclosure are applicable to a variety of wireless access technologies such as code division multiple access (CDMA), frequency division multiple access (FDMA), time division multiple access (TDMA), orthogonal frequency division multiple access (OFDMA), and single carrier frequency division multiple access (SC-FDMA). CDMA can be implemented as a radio technology such as Universal Terrestrial Radio Access (UTRA) or CDMA2000. TDMA can be implemented as a radio technology such as Global System for Mobile communications (GSM)/General Packet Radio Service (GPRS)/Enhanced Data Rates for GSM Evolution (EDGE). OFDMA can be implemented as a radio technology such as Institute of Electrical and Electronics Engineers (IEEE) 802.11 (Wireless Fidelity (Wi-Fi)), IEEE 802.16 (Worldwide interoperability for Microwave Access (WiMAX)), IEEE 802.20, and Evolved UTRA (E-UTRA). UTRA is a part of Universal Mobile Telecommunications System (UMTS). 3rd Generation Partnership Project (3GPP) Long Term Evolution (LTE) is part of Evolved UMTS (E-UMTS) using E-UTRA, and LTE-Advanced (A) is an evolved version of 3GPP LTE. 3GPP NR (New Radio or New Radio Access Technology) is an evolved version of 3GPP LTE/LTE-A.

As more and more communication devices require a larger communication capacity, there is a need for mobile broadband communication enhanced over conventional radio access technology (RAT). In addition, massive Machine Type Communications (MTC) capable of providing a variety of services anywhere and anytime by connecting multiple devices and objects is another important issue to be considered for next generation communications. Communication system design considering services/UEs sensitive to reliability and latency is also under discussion. As such, introduction of new radio access technology considering enhanced mobile broadband communication (eMBB), massive MTC, and Ultra-Reliable and Low Latency Communication (URLLC) is being discussed. In the present disclosure, for simplicity, this technology will be referred to as NR (New Radio or New RAT).

The term "base station" as used herein may be replaced by terms such as fixed station, Node B, gNode B (gNB), Access Point (AP), cell, or transmission and reception point (TRP). Repeater may be replaced by terms such as Relay Node (RN), Relay Station, etc. Also, the term "terminal" may be replaced by terms such as User Equipment (UE), Mobile Station (MS), Mobile Subscriber Station (MSS), Subscriber Station (SS), etc.

For clarity, the description will focus on 3GPP NR, but the technical ideas of the present disclosure are not limited thereto.

Details of the background, terminology, abbreviations, etc. used herein may be found in documents published before the present disclosure. For example, the present disclosure may be supported by the following documents:
- 38.211: Physical channels and modulation
- 38.212: Multiplexing and channel coding
- 38.213: Physical layer procedures for control
- 38.214: Physical layer procedures for data
- 38.215: Physical layer measurements
- 38.300: NR and NG-RAN Overall Description
- 38.304: User Equipment (UE) procedures in idle mode and in RRC Inactive state
- 38.321Medium Access Control (MAC) protocol specification
- 38.331: Radio Resource Control (RRC) protocol specification
- 37.213: Introduction of channel access procedures to unlicensed spectrum for NR-based access
- 36.355: LTE Positioning Protocol
- 37.355: LTE Positioning Protocol

### Terms and acronyms

- 5GC: 5G Core Network
- 5GS: 5G System
- NES: network energy saving
- ES: energy saving
- SSB: synchronization signal/PBCH block
- FR: frequency range
- CC: component carrier
- NCGI: NR Cell Global Identifier
- SI: system information
- PCell: primary cell
- SCell: secondary cell
- PDCCH: Physical Downlink Control CHannel
- PDSCH: Physical Downlink Shared CHannel
- PUSCH: Physical Uplink Shared CHannel
- CSI: Channel state information
- RRM: Radio resource management
- SCS: Sub-carrier spacing
- RLM: Radio link monitoring
- DCI: Downlink Control Information
- CAP: Channel Access Procedure
- Ucell: Unlicensed cell
- TBS: Transport Block Size
- TDRA: Time Domain Resource Allocation
- SLIV: Starting and Length Indicator Value (The SLIV is a field that indicates the starting symbol index and the number of symbols in a slot for a PDSCH and/or PUSCH, and the SLIV is carried on a PDCCH scheduling the corresponding PDSCH and/or PUSCH.)
- BWP: BandWidth Part (The BWP may be composed of consecutive resource blocks (RBs) in the frequency domain, which may correspond to one numerology (e.g., subcarrier spacing, cyclic prefix (CP) length, slot/mini-slot duration, etc.). In addition, multiple BWPs may be configured on one carrier (the number of BWPs per carrier may be limited), but the number of active BWPs may be limited in each carrier (e.g., one).)
- CORESET: COntrol REsourse SET (The CORESET refers to a time frequency resource region capable of transmitting a PDCCH, and the number of CORESETs per BWP may be limited.)
- REG: Resource element group
- SFI: Slot Format Indicator (The SFI is an indicator that indicates the DL/UL direction at the symbol level in specific slot(s), and the SFI is transmitted over a group-common PDCCH.)
- COT: Channel occupancy time
- SPS: Semi-persistent scheduling
- QCL: Quasi-Co-Location (QCL relationship between two reference signals may mean that QCL parameters such as Doppler shift, Doppler spread, average delay, delay spread, Spatial Rx parameter, etc. obtained from one reference signal can be applied to the other reference signal (or antenna port(s) of that RS). In the NR system, four QCL types are defined as follows 'typeA': {Doppler shift, Doppler spread, average delay, delay spread}, 'typeB': {Doppler shift, Doppler spread}, 'typeC': {Doppler shift, average delay}, 'typeD': {Spatial Rx parameter} For any DL RS antenna port(s), the first DL RS may be set to a reference to QCL type X (X=A, B, C, or D), and the second DL RS may be set to a reference to QCL type Y (Y=A, B, C, or D but X≠Y).
- TCI: Transmission Configuration Indication (One TCI state contains the QCL relationship between one or more DL RSs, such as the DM-RS ports of the PDSCH, the DM-RS port of PDCCH, or the CSI-RS port(s) of a CSI-RS resource. For the 'Transmission Configuration Indication' field in the DCI scheduling PDSCH, the TCI state index corresponding to each code point comprising the field is activated by the MAC CE, and the TCI state setting for each TCI state index is set through RRC signaling. In Rel-16 NR systems, the corresponding TCI state is set between DL RSs, but future releases may allow setting between DL RSs and UL RSs or between UL RSs and UL RSs. Examples of UL RS are SRS, PUSCH DM-RS, PUCCH DM-RS, etc.).
- SRI: SRS resource indicator (indicates one of the SRS resource index values set in 'SRS resource indicator' among the fields in the DCI scheduling PUSCH. When transmitting PUSCH, the terminal can transmit PUSCH utilizing the same spatial domain transmission filter used to transmit and receive the reference signal associated with the corresponding SRS resource. In this case, the reference RS is set by RRC signaling through the SRS-SpatialRelationInfo parameter for each SRS resource, and SS/PBCH block, CSI-RS, or SRS may be set as the reference RS.)
- TRP: Transmission and Reception Point

In a wireless communication system, a terminal receives information from a base station through a downlink (DL), and a terminal transmits information to the base station through an uplink (UL). The information transmitted and received by the base station and the terminal includes data and various control information, and various physical channels exist depending on the type/use of the information they transmit and receive.

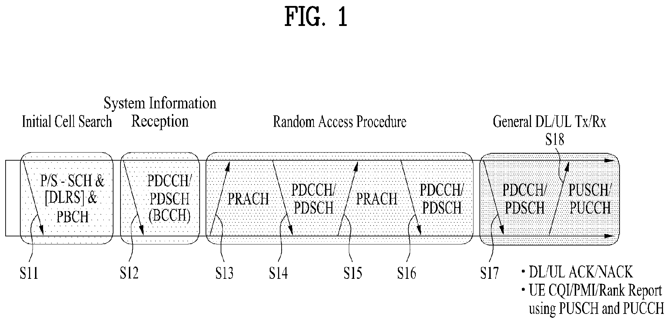

FIG. 1 is a diagram to illustrate the physical channels utilized in the 3GPP NR system and a typical signal transmission method using them.

When powered on or when a UE initially enters a cell, the UE performs initial cell search involving synchronization with a BS in step S11. For initial cell search, the UE receives a synchronization signal block (SSB). The SSB includes a primary synchronization signal (PSS), a secondary synchronization signal (SSS), and a physical broadcast channel (PBCH). The UE synchronizes with the BS and acquires information such as a cell Identifier (ID) based on the PSS/SSS. Then the UE may receive broadcast information from the cell on the PBCH. In the meantime, the UE may check a downlink channel status by receiving a downlink reference signal (DL RS) during initial cell search.

After initial cell search, the UE may acquire more specific system information by receiving a physical downlink control channel (PDCCH) and receiving a physical downlink shared channel (PDSCH) based on information of the PDCCH in step S12.

Subsequently, to complete connection to the eNB, the UE may perform a random access procedure with the eNB (S13 to S16). In the random access procedure, the UE may transmit a preamble on a physical random access channel (PRACH) (S13) and may receive a PDCCH and a random access response (RAR) for the preamble on a PDSCH associated with the PDCCH (S14). The UE may transmit a physical uplink shared channel (PUSCH) by using scheduling information in the RAR (S15), and perform a contention resolution procedure including reception of a PDCCH signal and a PDSCH signal corresponding to the PDCCH signal (S16).

After the above procedure, the UE may receive a PDCCH and/or a PDSCH from the BS (S17) and transmit a PUSCH and/or a physical uplink control channel (PUCCH) to the BS (S18), in a general UL/DL signal transmission procedure. Control information that the UE transmits to the BS is generically called uplink control information (UCI). The UCI includes a hybrid automatic repeat and request acknowledgement/negative acknowledgement (HARQ-ACK/NACK), a scheduling request (SR), a channel quality indicator (CQI), a precoding matrix index (PMI), a rank indicator (RI), etc. In general, UCI is transmitted periodically on a PUCCH. However, if control information and traffic data should be transmitted simultaneously, the control information and traffic data may be transmitted on a PUSCH. In addition, the UCI may be transmitted aperiodically on the PUSCH, upon receipt of a request/command from a network.

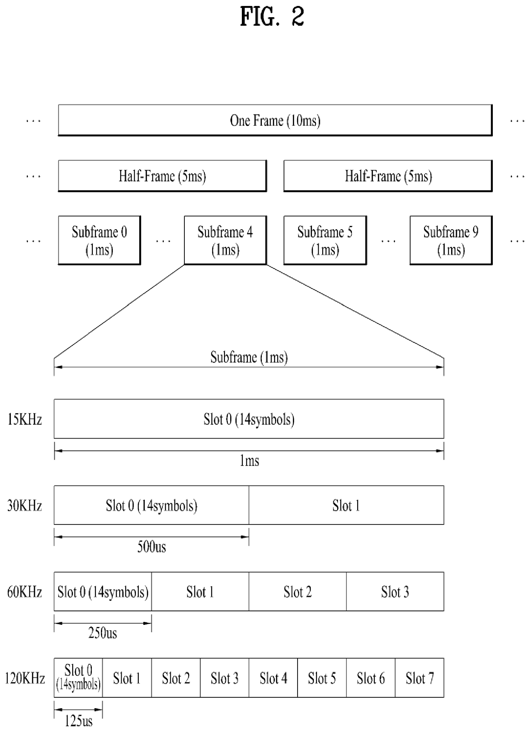

FIG. 2 illustrates the structure of a NR radio frame to which the present disclosure is applicable. Referring to FIG. 2, a radio frame may be used for UL transmission and DL transmission in NR. A radio frame is 10 ms in length, and may be defined by two 5-ms half-frames. An HF may include five 1-ms subframes. A subframe may be divided into one or more slots, and the number of slots in an SF may be determined according to a subcarrier spacing (SCS). Each slot may include 12 or 14 OFDM(A) symbols according to a cyclic prefix (CP).

Table 1 shows how the number of symbols per slot, the number of slots per frame, and the number of slots per subframe varies depending on the SCS when normal CP is used.

**[Table 1]**

| SCS (15*2u) | N^{s!ot}_{symb} | N^{frame,u}ₛₗₒₜ | N^{subframe,u}ₛₗₒₜ |
|---|---|---|---|
| 15 kHz (u=0) | 14 | 10 | 1 |
| 30 kHz (u=1) | 14 | 20 | 2 |
| 60 kHz (u=2) | 14 | 40 | 4 |
| 120 kHz (u=3) | 14 | 80 | 8 |
| 240 kHz (u=4) | 14 | 160 | 16 |

| | | | |
|---|---|---|---|
| * N^{slots}_{ymb}: Number of symbols in a slot * N^{frame,u}ₛₗₒₜ: Number of slots in the frame * N^{subframe,u}ₛₗₒₜ: Number of slots in the subframe | | | |

Table 2 below lists the number of symbols per slot, the number of slots per frame, and the number of slots per subframe according to an SCS in the ECP case.

**[Table 2]**

| SCS (15*2^u) | N^{slots}_{ymb} | N^{frame,u}ₛₗₒₜ | N^{subframe,u}ₛₗₒₜ |
|---|---|---|---|
| 60 kHz (u=2) | 12 | 40 | 4 |

The structure of a frame is only an example, and the number of subframes, number of slots, and number of symbols in a frame can be varied.

In the NR system, different OFDM(A) numerologies (e.g., SCSs, CP lengths, etc.) may be configured for a plurality of cells aggregated for one UE. Thus, the (absolute) duration of a time resource (e.g., SF, slot, or TTI) including the same number of symbols may differ between the aggregated cells (such a time resource is commonly referred to as a time unit (TU) for convenience of description).

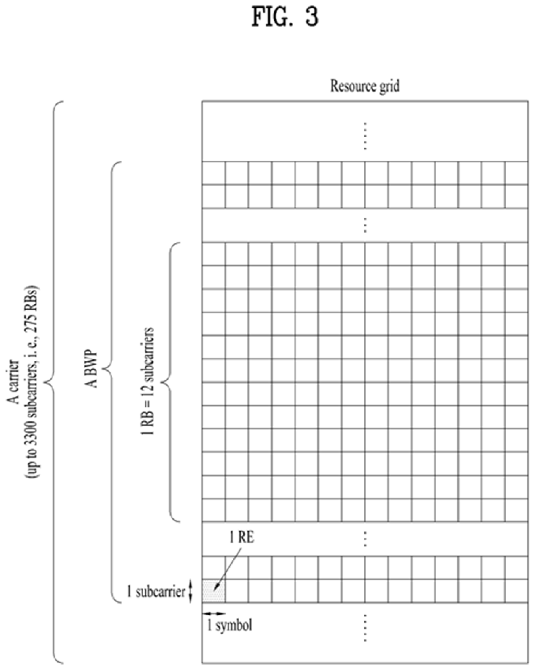

FIG. 3 illustrates the slot structure of a NR frame to which the present disclosure is applicable. Referring to FIG. 3, one slot includes a plurality of symbols in the time domain. For example, one slot may include 14 symbols in a normal CP and 12 symbols in an extended CP. Alternatively, one slot may include 7 symbols in the normal CP and 6 symbols in the extended CP. A carrier may include a plurality of subcarriers in the frequency domain. A resource block (RB) is defined as a plurality of consecutive subcarriers (e.g., 12 subcarriers) in the frequency domain. A bandwidth part (BWP) may be defined as a plurality of consecutive (P)RBs in the frequency domain, and the BWP may correspond to one numerology (e.g., SCS, CP length, etc.). The carrier may include up to N (e.g., 5) BWPs. Data communication may be conducted in an activated BWP. In a resource grid, each element may be referred to as a resource element (RE) and may be mapped to one complex symbol.

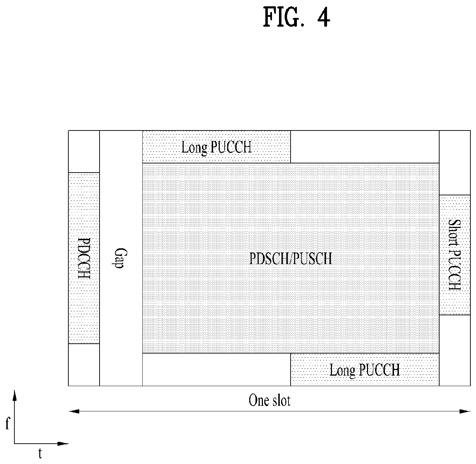

FIG. 4 is a diagram illustrating exemplary mapping of physical channels in a slot, to which the embodiment is applicable. One slot may include all of a DL control channel, DL or UL data, and a UL control channel. For example, the first N symbols of a slot may be used to transmit a DL control channel (hereinafter, referred to as a DL control region), and the last M symbols of the slot may be used to transmit a UL control channel (hereinafter, referred to as a UL control region). Each of N and M is an integer equal to or larger than 0. A resource area (hereinafter, referred to as a data region) between the DL control region and the UL control region may be used to transmit DL data or UL data. There may be a time gap for DL-to-UL or UL-to-DL switching between a control region and a data region. A PDCCH may be transmitted in the DL control region, and a PDSCH may be transmitted in the DL data region. Some symbols at a DL-to-UL switching time in the slot may be used as the time gap.

The PDCCH delivers DCI. For example, the PDCCH (i.e., DCI) may carry information about a transport format and resource allocation of a DL shared channel (DL-SCH), resource allocation information of an uplink shared channel (UL-SCH), paging information on a paging channel (PCH), system information on the DL-SCH, information on resource allocation of a higher-layer control message such as an RAR transmitted on a PDSCH, a transmit power control command, information about activation/release of configured scheduling, and so on. The DCI includes a cyclic redundancy check (CRC). The CRC is masked with various identifiers (IDs) (e.g. a radio network temporary identifier (RNTI)) according to an owner or usage of the PDCCH. For example, if the PDCCH is for a specific UE, the CRC is masked by a UE ID (e.g., cell-RNTI (C-RNTI)). If the PDCCH is for a paging message, the CRC is masked by a paging-RNTI (P-RNTI). If the PDCCH is for system information (e.g., a system information block (SIB)), the CRC is masked by a system information RNTI (SI-RNTI). When the PDCCH is for an RAR, the CRC is masked by a random access-RNTI (RA-RNTI).

To receive PDCCH, the terminal may monitor (e.g., blind decode) a set of PDCCH candidates in the CORESET. PDCCH candidates represent the CCE(s) that the terminal monitors for PDCCH reception/detection. PDCCH monitoring may be performed on one or more CORESETs on the active DL BWP on each active cell for which PDCCH monitoring is enabled. The set of PDCCH candidates monitored by the terminal is defined as the PDCCH Search Space (SS) set. The SS set may be a Common Search Space (CSS) set or a UE-specific Search Space (USS) set.

Table 3 shows the characteristics of each SS.

**[Table 3]**

| Search Space | Type | RNTI | Use Case |
|---|---|---|---|
| Type0-PDCCH | Common | SI-RNTI on a primary cell | Broadcast of System Information |
| Type0A-PDCCH | Common | SI-RNTI on a primary cell | Broadcast of System Information |
| Type1-PDCCH | Common | RA-RNTI or TC-RNTI on a primary cell | Msg2, Msg4 in RACH |
| Type2-PDCCH | Common | P-RNTI on a primary cell | Paging System Information change notification |
| Type3-PDCCH | Common | INT-RNTI, SFI-RNTI, TPC-PUSCH-RNTI, TPC-PUCCH-RNTI, TPC-SRS-RNTI, C-RNTI, MCS-C-RNTI or CS-RNTI | Group signaling |
| UE Specific | UE Specific | C-RNTI, MCS-C-RNTI or CS-RNTI | UE signaling (e.g., PDSCH/PUSCH) |

SS sets may be established via system information (e.g., MIB) or terminal-specific upper layer (e.g., RRC) signaling. Each DL BWP in the serving cell may have no more than S (e.g., 10) SS sets established. For example, the following parameters/information may be provided for each SS set Each SS set is associated with one CORESET, and each CORESET configuration may be associated with one or more SS sets.
- searchSpaceId: Represents the ID of the SS set.
- controlResourceSetId: Indicates the CORESET associated with the SS set.
- monitoringSlotPeriodicityAndOffset: Indicates the PDCCH monitoring periodicity interval (in slots) and the PDCCH monitoring interval offset (in slots).
- monitoringSymbolsWithinSlot: Indicates the first OFDMA symbol(s) for PDCCH monitoring within the slot for which PDCCH monitoring is enabled. It is indicated via a bitmap, where each bit corresponds to each OFDMA symbol within the slot. The MSB of the bitmap corresponds to the first OFDM symbol in the slot. The OFDMA symbol(s) corresponding to the bit(s) with a bit value of 1 corresponds to the first symbol(s) in the CORESET in the slot.
- nrofCandidates: Indicates the number of PDCCH candidates per AL={1, 2, 4, 8, 16} (e.g., a value of one of 0, 1, 2, 3, 4, 5, 6, 8).
- searchSpaceType: Indicates whether the SS type is CSS or USS.
- DCI format: Indicates the DCI format of the PDCCH candidate.

Based on the CORESET/SS set settings, the terminal may monitor PDCCH candidates in one or more SS sets in the slot. An occasion (e.g., a time/frequency resource) for monitoring PDCCH candidates is defined as a PDCCH (monitoring) opportunity. One or more PDCCH (monitoring) opportunities may be configured within a slot.

**[Table 4]**

| PUCCH format | Length in OFDM symbols ${N}_{symb}^{PUCCH}$ | Number of bits | Usage | Etc |
|---|---|---|---|---|
| 0 | 1 - 2 | ≤2 | HARQ, SR | Sequence selection |
| 1 | 4 - 14 | ≤2 | HARQ, [SR] | Sequence modulation |
| 2 | 1 - 2 | >2 | HARQ, CSI, [SR] | CP-OFDM |
| 3 | 4 - 14 | >2 | HARQ, CSI, [SR] | DFT-s-OFDM (no UE multiplexing) |
| 4 | 4 - 14 | >2 | HARQ, CSI, [SR] | DFT-s-OFDM (Pre DFT OCC) |

1) PUCCH Format 0 (PF0)
   - Supported UCI payload size: up to K bits (e.g., K = 2)
   - Number of OFDM symbols that make up a single PUCCH: 1 to X symbols (e.g., X = 2)
   - Transmission structure: consists of UCI signals only, without DM-RS, and transmits UCI status by selecting and transmitting one of several sequences
2) PUCCH Format 1 (PF1)
   - Supported UCI payload size: up to K bits (e.g., K = 2)
   - Number of OFDM symbols that make up a single PUCCH: Y to Z symbols (e.g., Y = 4, Z = 14)
   - Transmission structure: DM-RS and UCI composed of different OFDM symbols in TDM form, with UCI multiplying certain sequences with modulation (e.g., QPSK) symbols. Cyclic Shift (CS)/Orthogonal Cover Code (OCC) applied to both UCI and DM-RS to support CDM between multiple PUCCH resources (within the same RB) (following PUCCH format 1).
3) PUCCH Format 2 (PF2)
   - Supported UCI payload size: more than K bits (e.g., K = 2)
   - Number of OFDM symbols that make up a single PUCCH: 1 to X symbols (e.g., X = 2)
   - Transmission structure: DMRS and UCI are configured/mapped in FDM form within the same symbol and transmitted by applying only IFFT without DFT to the encoded UCI bits.
4) PUCCH Format 3 (PF3)
   - Supported UCI payload size: more than K bits (e.g., K = 2)
   - Number of OFDM symbols that make up a single PUCCH: Y to Z symbols (e.g., Y = 4, Z = 14)
   - Transmission structure: DMRS and UCI are configured/mapped in TDM form to different symbols and transmitted by applying DFT to the augmented UCI bits. Multiplexing is supported for multiple terminals by applying OCC in the DFT preamble to UCI and CS (or IFDM mapping) to DMRS.
5) PUCCH Format 4 (PF4)
   - Supported UCI payload size: more than K bits (e.g., K = 2)
   - Number of OFDM symbols that make up a single PUCCH: Y to Z symbols (e.g., Y = 4, Z = 14)
   - Transmission structure: DMRS and UCI are configured/mapped to different symbols in TDM format and transmitted without multiplexing between terminals by applying DFT to the encoded UCI bits.

### DRX (Discontinuous Reception) operation

The UE uses Discontinuous Reception (DRX) in RRC_IDLE and RRC_INACTIVE state in order to reduce power consumption. When the DRX is configured, the UE performs a DRX operation according to DRX configuration information.

When the UE operates based on the DRX, the UE repeats ON/OFF for reception. For example, when the DRX is configured, the UE attempts to receive/detect a PDCCH (e.g., PDCCH monitoring) only in a predetermined time interval (e.g., ON), and does not attempt to receive the PDCCH in the remaining time period (e.g., OFF/sleep).

At this time, a time period during which the UE should attempt to receive the PDCCH is referred to as an On-duration, and this on-duration is defined once per DRX cycle. The UE can receive DRX configuration information from a gNB through a RRC signaling and operate as the DRX through a reception of the (Long) DRX command MAC CE.

The DRX configuration information may be included in the MAC-CellGroupConfig. The IE MAC-CellGroupConfig is used to configure MAC parameters for a cell group, including DRX.

DRX (Discontinuous Reception) means an operation mode for enabling a UE (User Equipment) to reduce battery consumption so that the UE can receive/monitor a downlink channel discontiguously. That is, a UE configured with DRX can reduce power consumption by receiving a DL signal discontiguously. The DRX operation is performed in a DRX cycle indicative of a time interval in which On Duration is periodically repeated. The DRX cycle includes On Duration and sleep duration (or Opportunity for DRX). The On Duration indicates a time interval in which a UE monitors a PDCCH in order to receive the PDCCH. DRX may be performed in an RRC (Radio Resource Control)_IDLE state (or mode), an RRC_INACTIVE state (or mode), or an RRC_CONNECTED state (or mode). In the RRC_IDLE state and the RRC_INACTIVE state, DRX is used to receive a paging signal discontiguously.

RRC_Idle state: state in which a radio connection (RRC connection) is not established between a base station and a UE.
- RRC Inactive state: state in which a radio connection (RRC connection) has been established between a base station and a UE, but a radio connection is inactivated.
- RRC_Connected state: state in which a radio connection (RRC connection) has been established between a base station and a UE.

DRX is basically divided into Idle mode DRX, Connected DRX (C-DRX) and extended DRX. DRX applied in the RRC IDLE state is called Idle mode DRX, and DRX applied in the RRC CONNECTED state is called Connected mode DRX (C-DRX).

eDRX (Extended/enhanced DRX) is a mechanism capable of expanding the cycle of Idle mode DRX and C-DRX. In the Idle mode DRX, whether to permit eDRX may be configured based on system information (e.g., SIB1).

The SIB1 may include an eDRX-Allowed parameter. The eDRX-Allowed parameter is a parameter indicating whether Idle mode extended DRX is permitted.

### (1) IDLE Mode DRX

In the IDLE mode, the UE may use DRX to reduce power consumption. One paging occasion (PO) may be a time interval (e.g., a slot or a subframe) in which a paging-radio network temporary identifier (P-RNTI) based physical downlink control channel (PDCCH) may be transmitted. The P-RNTI-based PDCCH may address/schedule a paging message. For P-RNTI-based PDCCH transmission, the PO may indicate a first subframe for PDCCH repetition.

One paging frame (PF) is one radio frame which may include one or a plurality of paging occasions. When DRX is used, a UE may be configured to monitor only one PO per DRX cycle. The PF, PO and/or PNB may be determined based on a DRX parameter provided via network signaling (e.g., system information).

Hereafter, 'PDCCH' may refer to MPDCCH, NPDCCH and/or normal PDCCH. Hereafter, 'UE' may refer to MTC UE, BL (Bandwidth reduced Low complexity)/CE (coverage enhanced) UE, NB-IoT UE, Reduced Capability (RedCap) UE, normal UE and/or IAB-MT (mobile termination).

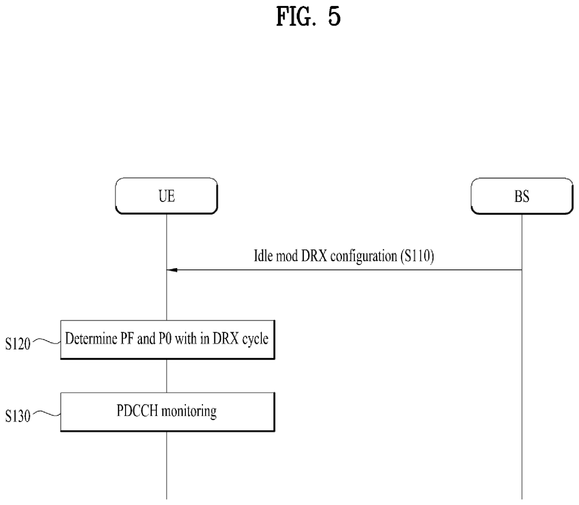

FIG. 5 is a flowchart showing an example of a method of performing an Idle mode DRX operation.

A UE receives, from a base station, Idle mode DRX configuration information through a higher layer signaling (e.g., system information) (S110).

Furthermore, the UE determines a PF (Paging Frame) and a PO (Paging Occasion), for monitoring a physical downlink control channel (e.g., PDCCH) in a paging DRX cycle based on the Idle mode DRX configuration information (S120). In this case, the DRX cycle includes On Duration and sleep duration (or Opportunity for DRX).

Furthermore, the UE monitors a PDCCH in the PO of the determined PF (S130). The UE monitors only one time interval (PO) for each paging DRX cycle. For example, the time interval may be a slot or a subframe.

Additionally, if the UE receives a PDCCH (more exactly, CRC of PDCCH) scrambled by a P-RNTI during On duration (i.e., if paging is detected), the UE may transit to a connected mode and transmit or receive data with the base station

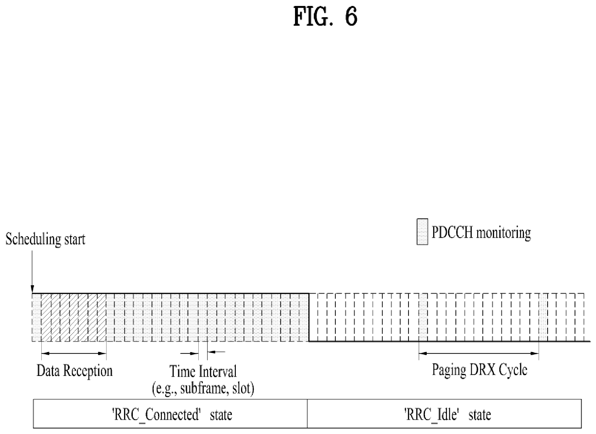

FIG. 6 is a diagram showing an example of an Idle mode DRX operation.

Referring to FIG. 6, if there is a traffic (data) toward a UE in the RRC_Idle state (hereinafter referred to as 'Idle state'), paging occurs toward the corresponding UE.

Thus, the UE wakes up every (paging) DRX cycle and monitors a PDCCH.

If Paging is present, the UE transits to a Connected state, and receives data. Otherwise, the UE may enter a sleep mode again.

### (2) Connected Mode DRX (C-DRX)

C-DRX is DRX applied in the RRC Connected state. The DRX cycle of C-DRX may be configured with a Short DRX cycle and/or a Long DRX cycle. The Short DRX cycle is Optional.

If C-DRX is configured, a UE performs PDCCH monitoring for On Duration. If there is a PDCCH successfully detected during the PDCCH monitoring, the UE operates (or runs) an inactivity timer and maintains an awake state. In contrast, if there is no PDCCH successfully detected during the PDCCH monitoring, the UE enters to a sleep state after the On Duration is ended.

If C-DRX is configured, a PDCCH reception occasion (e.g., a slot having a PDCCH search space/candidate) may be configured discontiguously based on a C-DRX configuration. In contrast, if C-DRX is not configured, a PDCCH reception occasion (e.g., a slot having a PDCCH search space/candidate) may be configured contiguously in accordance with PDCCH search space configuration. Meanwhile, PDCCH monitoring may be limited in a time interval configured as a measurement gap, regardless of a C-DRX configuration.

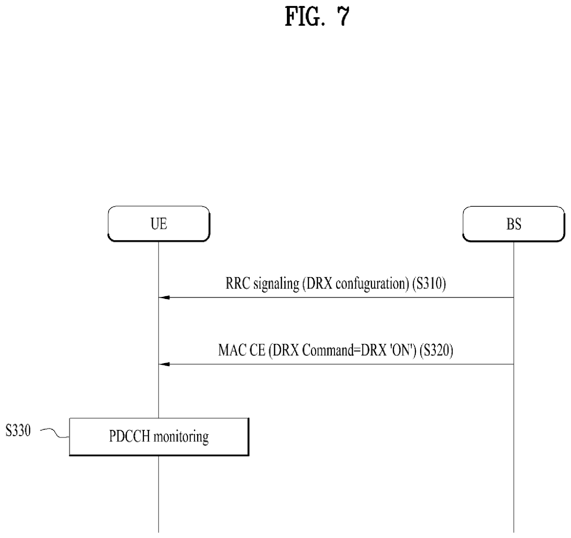

FIG. 7 is a flowchart showing an example of a method of performing a C-DRX operation.

A UE receives, from a base station, RRC signalling (e.g., MAC-MainConfig IE) including DRX configuration information (S310). The DRX configuration information may include the following information.
- on-duration: the duration that the UE waits for, after waking up, to receive PDCCHs. If the UE successfully decodes a PDCCH, the UE stays awake and starts the drx-inactivity timer;
- onDurationTimer: the duration in which the DRX cycle starts. For example, the duration may refer to a time interval to be continuously monitored at the beginning of a DRX cycle, which may be represented in units of milliseconds (ms).
- drx-InactivityTimer: the duration after the PDCCH occasion in which a PDCCH indicates a new UL or DL transmission for the MAC entity. For example, the duration may be a time interval represented in units of ms after the UE decodes the PDCCH including scheduling information. That is, the duration refers to a duration in which the UE waits to successfully decode another PDCCH after decoding the PDCCH. If no other PDCCHs are detected within the corresponding duration, the UE transitions to the sleep mode.

The UE restarts the drx-inactivity timer after successfully decoding a PDCCH for initial transmission only except for a PDCCH for retransmission.
- drx-RetransmissionTimer: for DL, the maximum duration until a DL retransmission is received; for UL the maximum duration until a grant for UL retransmission is received. For example, for UL, drx-RetransmissionTimer indicates the number of slots in a bandwidth part (BWP) where a transport block (TB) to be retransmitted is transmitted. For DL, drx-RetransmissionTimer indicates the number of slots in a BWP in which a TB to be retransmitted is received.
- longDRX-Cycle: On Duration occurrence period
- drxStartOffset: a subframe number in which a DRX cycle is started
- drxShortCycleTimer: the duration the UE shall follow the Short DRX cycle;
- shortDRX-Cycle: a DRX Cycle operating as much as a drxShortCycleTimer number when Drx-InactivityTimer is terminated
- drx-SlotOffset: the delay before drx-onDurationTimer starts. For example, the delay may be expressed in units of ms, and more particularly, in multiples of 1/32 ms.
- Active time: total duration that the UE monitors PDCCH, which may include (a) the "on-duration" of the DRX cycle, (b) the time UE is performing continuous reception while the drx-inactivity timer has not expired, and (c) the time when the UE is performing continuous reception while waiting for a retransmission opportunity.

Specifically, when the DRX cycle is configured, an active time for a serving cell of a DRX group includes the following.
- (a) drx-onDurationTimer or (b) drx-InactivityTimer configured for the DRX group is running; or
- (c) drx-RetransmissionTimerDL or drx-RetransmissionTimerUL is running on any Serving Cell in the DRX group; or
- (d) ra-ContentionResolutionTimer or msgB-ResponseWindow is running; or
- (e) a Scheduling Request is sent on PUCCH and is pending; or
- (f) a PDCCH indicating a new transmission addressed to the C-RNTI of the MAC entity has not been received after successful reception of a Random Access Response for the Random Access Preamble not selected by the MAC entity among the contention-based Random Access Preamble.

Furthermore, if DRX 'ON' is configured through the DRX command of a MAC CE (command element) (S320), the UE monitors a PDCCH for the ON duration of a DRX cycle based on the DRX configuration (S330).

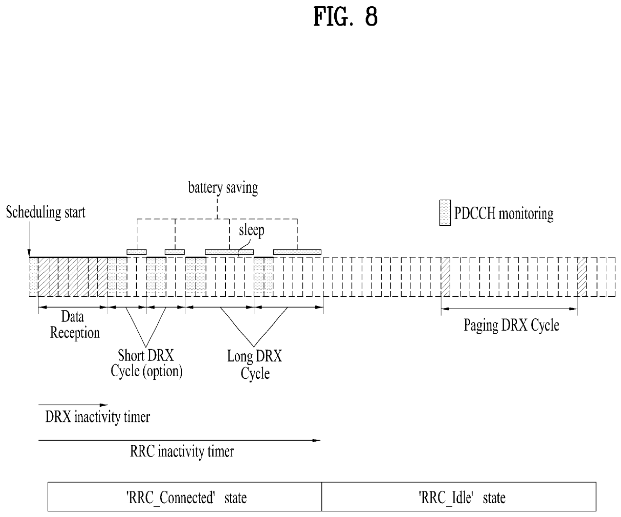

FIG. 8 is a diagram showing an example of a C-DRX operation.

Referring to FIG. 8 when the UE receives scheduling information (e.g., DL assignment or UL grant) in the RRC_Connected state (hereinafter referred to as the connected state), the UE runs a DRX inactivity timer and an RRC inactivity timer.

After the DRX inactivity timer expires, a DRX mode starts. The UE wakes up in a DRX cycle and monitors a PDCCH during a predetermined time (on duration timer).

In this case, if Short DRX is configured, when the UE starts the DRX mode, the UE first starts in a short DRX cycle, and starts to a long DRX cycle after the short DRX cycle is terminated. The Long DRX cycle is a multiple of the short DRX cycle. In the short DRX cycle, the UE wakes up more frequently. After the RRC inactivity timer expires, the UE shifts to an Idle state and performs an Idle mode DRX operation.

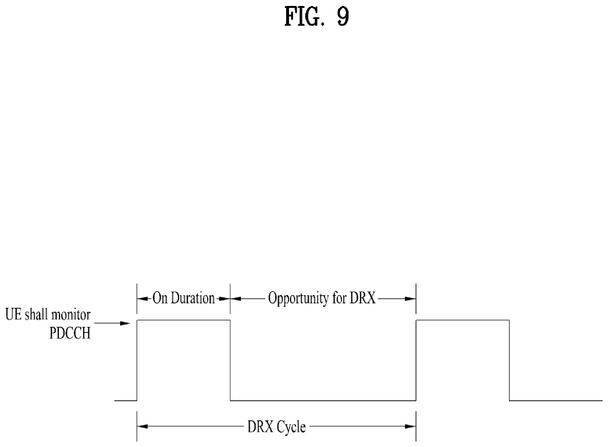

FIG. 9 illustrates a DRX cycle. The C-DRX operation has been introduced for power saving of the UE. If the UE receives no PDCCH within the on-duration defined for each DRX cycle, the UE enters the sleep mode until the next DRX cycle and does not perform transmission/reception.

On the other hand, when the UE receives a PDCCH within the on-duration, the active time may continue (or increase) based on the operations of an inactivity timer, a retransmission timer, etc. If the UE receives no additional data within the active time, the UE may operate in the sleep mode until the next DRX operation.

In NR, a wake-up signal (WUS) has been introduced to obtain additional power saving gain in addition to the existing C-DRX operation. The WUS may be to inform whether the UE needs to perform PDCCH monitoring within the on-duration of each DRX cycle (or a plurality of DRX cycles). If the UE detects no WUS on a specified or indicated WUS occasion, the UE may maintain the sleep mode without performing PDCCH monitoring in one or more DRX cycles associated with the corresponding WUS.

### (3) WUS (DCI Format 2_6)

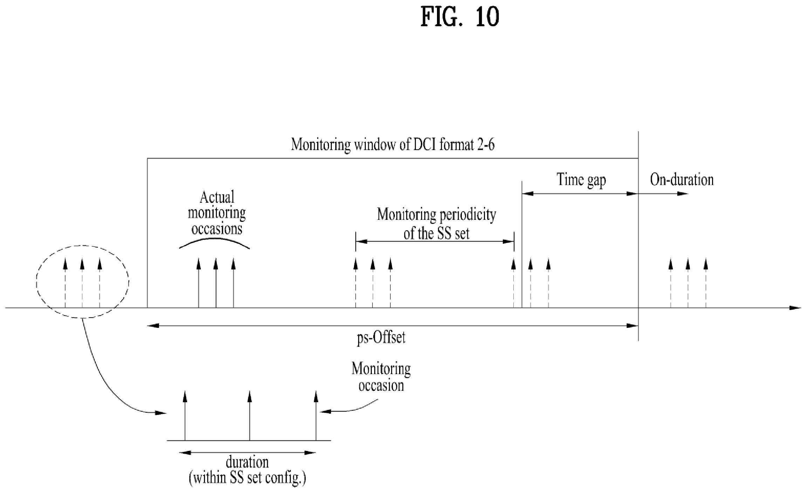

FIG. 10 is a diagram illustrating a method for monitoring DCI format 2_6.

According to the power saving technology of Rel-16 NR systems, when the DRX operation is performed, it is possible to inform the UE whether the UE needs to wake up for each DRX cycle by DCI format 2_6.

Referring to FIG. 10, a PDCCH monitoring occasion for DCI format 2_6 may be determined by ps-Offset indicated by the network and a time gap reported by the UE. In this case, the time gap reported by the UE may be interpreted as a preparation period necessary for an operation after the UE wakes up.

Referring to FIG. 10, the base station (BS) may provide the UE with a search space (SS) set configuration capable of monitoring DCI format 2_6. According to the corresponding SS set configuration, DCI format 2_6 may be monitored in consecutive slots as long as the duration at the monitoring periodicity interval.

In the DRX configuration, a monitoring window for monitoring DCI format 2_6 may be determined by the start time of the DRX cycle (e.g., a point where the on-duration timer starts) and ps-Offset configured by the BS. In addition, PDCCH monitoring may not be required in the time gap reported by the UE. Consequently, an SS set monitoring occasion on which the UE actually performs monitoring may be determined as a first full duration (i.e., actual monitoring occasions of FIG. 10) within the monitoring window.

If the UE detects DCI format 2_6 in the monitoring window configured based on ps-Offset, the UE may be informed by the BS whether the UE wakes up in the next DRX cycle.

### NES (network energy saving)

Energy saving of BSs is considered important in wireless communication systems including 3GPP, because it may contribute to building eco-friendly networks and reducing the operational expenditure (OPEX) of communication service providers by reducing carbon emissions. Particularly, since along with the introduction of 5G communication, high transmission rates are required, a BS should be equipped with more antennas and provide services in a wider bandwidth and frequency band. As a result, recent studies have revealed that the energy cost of BSs has reached up to 20% of the total OPEX. Due to the increased interest in BS energy saving, research on network energy savings (NES) is under discussion in 3GPP NR release 18. Due to such increased interest in BS energy saving, a new study item titled "study on network energy savings" has been approved for a predetermined scenario (e.g., 3GPP NR release 18).

Specifically, the following enhancement techniques are under consideration in the item to improve energy-saving capabilities from the perspective of BS transmission and reception.
- A method for more finely adjusting transmission and/or reception dynamically and/or semi-statically in one or more NES techniques in the time, frequency, spatial, and power domains, and a method for achieving a more efficient operation through potential UE assistance/feedback and potential UE assistance information.

A detailed description will be given below of a method for monitoring a PDCCH in a time period (e.g., an inactive time) outside an active time, when connected-mode discontinuous reception (C-DRX) is configured for a UE.

### PDCCH monitoring outside UE C-DRX active time

When a UE initially accesses a BS and enters a connected mode (or RRC_CONNECTED state), it should continuously perform PDCCH monitoring to identify whether there is a transmission scheduled for the UE in each configured search space (SS). However, when a transmission is not always scheduled for the UE, the UE performs an unnecessary PDCCH monitoring operation every time. In this case, the battery of the UE may be depleted quickly. To save the power of the UE, therefore, the BS may configure C-DRX for the UE, which configures an ON duration during which PDCCH monitoring should be performed and an OFF duration during which PDCCH monitoring is not required. From the perspective of the BS, the C-DRX of the UE may also be helpful for energy saving (ES). For example, since the BS does not need to transmit a PDCCH to a specific UE during a C-DRX OFF duration of the UE, it may use PDCCH resources for other purposes or obtain an ES gain through DTX/DRX. However, even during the OFF duration, the UE may be able to use/transmit a signal in preconfigured resources (e.g., an SR, a PUCCH, a CG-PUSCH, and so on) without restriction as needed. In this regard, the BS should remain ready to receive a UL signal that may be transmitted at any time from the UE. Moreover, since C-DRX is configured UE-specifically, DRX cycles or ON/OFF durations may not be aligned between UEs within a cell. In this case, when the ON durations of the UEs are configured in time division multiplexing (TDM), it may be difficult for the BS to expect an ES gain because the BS is not capable of sleeping or performing a sleep operation in order to transmit a PDCCH during every ON duration.

Therefore, similar to the C-DRX for the UE, the BS may save energy by turning off the transmission/reception of a specific signal/channel in an inactive period through a cell(-specific) DTX/DRX configuration that repeats active and inactive periods periodically. To transmit and receive data, the UE should be in the RRC_CONNECTED mode by establishing a connection (or RRC connection) with the BS. When there is no UE activity for a specific time, the BS may transition the UE to the RRC_IDLE state to reduce the power consumption of the UE. The UE may need to transition back to the connected mode (or RRC connected mode) whenever transmission/reception is required. Such RRC signaling for the transition of the connected mode may increase latency for signal transmission and reception of the UE. Alternatively, when the UE needs to frequently transmit small data, not only latency (e.g., latency caused by additional RRC signaling) but also signaling overhead may increase. To reduce the signaling overhead and latency (e.g., signal transmission/reception latency of the UE) of the BS caused by such frequent RRC state changes, a new mode/state called RRC_INACTIVE has been introduced in NR. In the inactive mode, a signal transmission/reception operation may be performed quickly with low signaling overhead by stopping/suspending the RRC connection.

When a cell DTX/DRX operation is applied not only to UEs in the RRC connected mode but also to UEs in the idle and inactive modes, a method for setting parameters of a cell DTX/DRX configuration, a method for activating the cell DTX/DRX configuration, and a method for transmitting/receiving a signal and channel affected by a cell DTX/DRX operation will be described in detail.

A UE in the (RRC) connected mode/state may perform PDCCH monitoring during a periodic ON duration to identify whether there is a DL/UL signal to be transmitted/received. Upon receipt of a PDCCH, the UE in the connected mode may perform DL reception or UL transmission according to an indication of the PDCCH. In the case of UL signal transmission, when there is data to be transmitted in a UL buffer, the UE may wake-up from a sleep mode and transmit a scheduling request (SR) regardless of C-DRX. In the case of a UE in the idle mode, the UE may periodically monitor paging or a paging signal, and when the UE is not a target UE of the paging signal, it may operate in Idle mode DRX (I-DRX), entering the sleep mode again.

When it is said that the UE operates in the sleep mode, this may mean "regardless of an active time determined by C-DRX" or "even in a period other than an active time determined by C-DRX." For example, the sleep mode of the UE may be performed regardless of the active time and/or inactive time of DRX. Repetition of a time period including an ON duration and an OFF duration in a C-DRX operation is called a DRX cycle. The length of the DRX cycle may be defined as the start of an ON duration to before the next ON duration, and DRX cycles include a long DRX cycle and a short DRX cycle. When the length of the DRX cycle is long, a PDSCH to be transmitted by the BS may occur immediately after the end of a specific ON duration of the UE. In this case, the latency of the transmission of the PDSCH may increase in that the BS should wait until the next ON duration of the UE. However, from perspective of the BS, since the UE does not transmit periodic CSI (P-CSI) or a sounding reference signal (SRS) during the OFF duration, the BS may assign resources for the P-CSI or the SRS to other UEs, thereby increasing resource utilization, and the UE may also perform an operation of transitioning to an energy saving mode for power saving during the OFF duration.

A long DRX cycle and a short DRX cycle may be configured simultaneously, and the long DRX cycle should be set to an integer multiple of the short DRX cycle (with the same onDurationTimer value). In this case, when there is no data activity (e.g., when no PDCCH is received) during the ON duration of the long DRX cycle, the UE may operate in the long DRX cycle. On the contrary, when there is a data activity, the UE may operate in the short DRX cycle for the duration of the drx-ShortCycleTimer, and when there is no data activity during the ON duration of the short DRX cycle, it may transition back to the long DRX cycle. Like the long cycle, the start of the ON duration in the short DRX cycle may be determined as or based on the values of drx-StartOffset and drx-SlotOffset.

The BS may instruct the UE to transition directly to the DRX sleep mode without operating in the active mode until the end of the ON duration through a DRX command MAC CE. That is, the BS may terminate the current active time for the UE and cause it to enter a DRX cycle (or DRX sleep mode) immediately through the DRX command MAC CE. When only a long DRX cycle is configured for the UE, the UE may operate in the long DRX cycle. When a short DRX cycle is also configured for the UE, the UE may enter the short DRX cycle mode immediately after receiving the DRX command MAC CE. Alternatively, when the BS indicates a long DRX command MAC CE, the UE may perform a long DRX cycle operation even if a short DRX cycle is configured.

Further, the BS may adjust the starting point (or starting time) of the long DRX cycle through an RRC parameter drx-LongCycleStartOffset. The value of drx-LongCycleStartOffset is defined in units of ms so that the long DRX cycle may start at a slot boundary. Further, the starting point of an ON duration may be set with slot-level granularity through another RRC parameter, drx-SlotOffset. In this case, the position of the ON duration may be relatively defined as a position obtained by applying a slot offset indicated by drx-SlotOffset from a reference point indicated by drx-LongCycleStartOffset. In other words, the starting point of the ON duration may be determined to be after the slot offset indicated by drx-SlotOffset from the reference point indicated by drx-LongCycleStartOffset.

When the UE wakes up only during the ON duration through a C-DRX configuration to monitor the presence of a PDCCH (or DCI) transmitted to the UE, the UE may save energy compared to monitoring a PDCCH continuously (e.g., in every slot). Further, when the BS has no data to transmit in an upcoming ON duration of the UE, the BS may transmit a WUS to the UE before the ON duration starts to inform the UE that it does not need to wake up (i.e., does not need to start the onDurationTimer). In this case, the battery of the UE may be further saved. Among UEs configured with C-DRX, the BS may transmit a WUS which may be transmitted in DCI format 2_6 at a WUS occasion configured before an ON duration to a UE that has no data to transmit/receive in the upcoming ON duration, thereby indicating that the UE does not need to wake up for this ON duration. Upon receipt of the WUS indication (or DCI format 2_6), the UE may maintain the sleep mode without transitioning to the active mode. In this case, greater ES may be achieved for the UE.

Similar to a C-DRX configuration for the UE, a cell DTX/DRX configuration may include parameters such as a periodicity, a slot/offset, and an ON duration. The cell DTX configuration and the cell DRX configuration may be configured independently and activated/deactivated independently. That is, only cell DTX may be configured without a cell DRX configuration, or only cell DTX may be activated. In contrast, only cell DRX may be configured without a cell DTX configuration, or only cell DTX may be activated without a cell DRX configuration. In other words, even if both cell DTX and cell DRX are configured, only one of the two may be activated. Similar to C-DRX for the UE, the cell DTX/DRX operation has a structure with an active period (ON duration) in which all signals and channels are transmitted/received without restriction, and an inactive period in which transmission/reception of all signals and channels is turned off. Alternatively, only specific signals and channels may be transmitted/received limitedly during the inactive period. For example, only PDCCH transmission or reception of a specific signal such as an RACH/SR PUCCH may be allowed in a time period (e.g., an inactive period) other than the active period. The cell DTX/DRX configuration may be configured and activated only by RRC signaling. Alternatively, all or some parameters related to the cell DTX/DRX configuration may be configured by RRC, and the cell DTX/DRX configuration may be activated through L1 signaling (e.g., group-common DCI) such as a PDCCH/DCI. In the active period of cell DTX/DRX, all signals and channels may be transmitted/received without special restrictions, as in a normal operation of the BS. A time period (or inactive period) other than the active period may basically be regarded as an inactive period. In this case, transmission/reception of signals/channels other than predetermined ones may be restricted in the inactive period. Only minimal transmission/reception in such an inactive period may bring an ES gain to the BS, and such a cell DRX/DTX operation may be considered to be an operation for the case of an NES state/mode set to ON.

Further, apart from a cell DTX/DRX configuration that repeats a preconfigured specific ON/OFF duration pattern periodically, the BS may configure cell OFF, which completely turns off a specific cell for a specific time, to save more energy. When a cell is turned off, UEs connected to the deactivated cell are not able to transmit or receive data at all. Therefore, the BS needs to move the UEs to another cell that is turned on. In particular, when a target cell for cell OFF is a PCell for specific UEs, the BS may trigger a handover procedure for the UEs to change the PCell. The trigger of the handover procedure may be dynamically indicated through L1 (UE-specific or group-common) signaling. To this end, the use of a DCI format for activating/deactivating the cell DTX/DRX configuration may be beneficial in terms of signaling overhead because the BS may dynamically indicate cell OFF to multiple UEs in a cell in a group-common manner. Additionally, since the DCI format includes an information block for each serving cell, the handover procedure for a PCell of a specific UE may be triggered by adding a cell OFF indication bit to the information block for the PCell.

In this regard, conditional handover (CHO) is a method in which a UE autonomously performs/triggers a handover procedure when a preconfigured condition is satisfied, even if a BS does not directly instruct a handover (HO) command to the UE. A UE for which CHO is configured by a source cell evaluates whether at least one HO condition (RSRP/RSRQ, SINR, and so on of a reference signal) is satisfied, and when one of the at least one HO condition is satisfied, the UE may perform an HO procedure of transmitting an RACH to a target cell.

Hereinafter, when it is said that the BS operates in an NES mode for ES, this may refer to an operation in which the BS preconfigures a plurality of OFF periods (DTX periods of the BS) that turn off the transmission of a specific DL signal for a specific time and dynamically indicates one of the plurality of OFF periods. A DL signal in the one OFF period may not be transmitted for a predefined time period. Further, it may refer to energy-saving operations of the BS and the UE not only in the time domain but also in the frequency domain and/or the spatial domain. The energy-saving operation in the frequency domain may refer to BWP switching, dynamic RB adaptation, and so on, and the energy-saving operation in the spatial domain may refer to semi-statically or dynamically turning off a specific reception antenna port of the BS and thus stopping the transmission/reception of a signal by the BS through the turned-off antenna port.

As such, the BS may indicate the activation/deactivation of a cell DTX/DRX configuration and/or CHO triggering for cell OFF through DCI format 2_9, which is a DCI format defined for the activation/deactivation of the cell DTX/DRX configuration and/or CHO triggering for cell OFF.

DCI format 2_9, which is defined for the activation/deactivation of a cell DTX/DRX configuration and/or CHO triggering for cell OFF, may be configured/defined as follows.

Specifically, the UE may receive information about cell DTX configuration(s) and/or cell DRX configuration(s) for a serving cell through higher-layer signaling such as RRC signaling. In this case, the UE may be dynamically instructed to activate or deactivate the cell DTX/DRX configuration (or the UE may be configured with activation or deactivation of a cell DTX/DRX configuration configured through higher-layer signaling such as RRC signaling) in a group-common manner through DCI format 2_9. Since the UE may have a plurality of serving cells, DCI format 2_9 may include a plurality of information blocks corresponding to the respective serving cells. Each information block may be configured to include at least 1 bit for activating or deactivating a cell DTX configuration and 1 bit for activating or deactivating a cell DRX configuration for a corresponding serving cell. When the UE is configured to monitor DCI format 2_9 in a Type-3 common search space (CSS), the UE may be preconfigured with the position of an information block it should monitor within DCI format 2_9 through an RRC parameter (e.g., position-inDCI-NES).

Further, the bit width of each information block in DCI format 2_9 may vary depending on the presence or absence of a cell DTX/DRX configuration. For example, an information block corresponding to a serving cell configured only with a cell DTX configuration or a cell DRX configuration may include 1 bit, and an information block corresponding to a serving cell configured with both cell DTX and cell DRX configurations may include 2 bits. Accordingly, when a CHO triggering bit for cell OFF of a specific serving cell is additionally included in the information block corresponding to the specific serving cell, the information block of the specific serving cell may include 1, 2, or N bits (where N=1 if the CHO triggering bit is 1 bit) depending on the presence of a cell DTX/DRX configuration. Alternatively, the CHO triggering bit may be set at a specific position (e.g., at the very beginning or end of DCI format 2_9, or before/after a specific information block) separately from the information block indicating the activation or deactivation of the cell DTX/DRX configuration within DCI format 2_9.

The BS may increase an ES gain for the BS and/or the UE through the indication of activation/deactivation of the cell DTX/DRX configuration and/or CHO triggering for cell OFF using DCI format 2_9 defined as such. For example, from the perspective of a BS operation, when the number of UEs accessed to a cell is small or there is little data activity depending on a cell condition (e.g., late at night), it is necessary to increase the ES gain of the BS through cell OFF. In this case, the BS may need to trigger CHO for the UEs through DCI format 2_9.

However, the UE does not perform PDCCH monitoring in a period other than an active period to save power. Alternatively, a UE configured to monitor DCI format 2_6 may exceptionally perform monitoring for DCI format 2_6 at a ps-Offset before an onDuration starts. In other words, a UE configured with UE C-DRX does not perform other PDCCH monitoring in a period (e.g., an inactive period) other than an active period (e.g., an active period based on a C-DRX configuration), except for the case where monitoring of DCI format 2_6 is configured. Therefore, even in the case of DCI format 2_9 indicating cell DTX/DRX (de)activation and/or cell OFF, the UE may only be able to receive it during the onDuration (or the active period) of the UE.

In this case, when the BS intends to dynamically indicate cell OFF in a period other than the active period, the BS should wait until the onDuration (or active period) of the UE configured with C-DRX to transmit DCI format 2_9. Therefore, the latency of the HO procedure and/or the latency of the activation/deactivation of the cell DTX/DRX configuration may be unnecessarily increased. Moreover, since a C-DRX configuration is indicated/configured UE-specifically, the onDuration (or active period) may differ for each UE within the cell. In this case, it may be difficult to provide immediate CHO triggering and/or an indication for activation/deactivation of the cell DTX/DRX configuration depending on a condition within the cell, which may lead to a delay in the power off of the cell. Such a delay in cell power-off may significantly reduce the ES gain of the BS/UE.

Therefore, the UE needs to monitor DCI format 2_9 even in an inactive period in a specific case, and the following Method 1 and Method 2 may be considered as a method of monitoring DCI format 2_9 in an inactive period.

An active period defined below may be the union of the operating time of a timer configured in relation to DRX (an inactivityTimer and/or a timer for retransmission) and a predefined time period of an onDuration. For example, when receiving a PDCCH during an onDuration, a UE configured with UE C-DRX may start the inactivityTimer. The UE may wait to receive transmission/reception scheduling from the BS until the inactivity timer expires. Additionally, even when the timer for retransmission is operating, the UE may maintain the active state for retransmission. Therefore, the active period related to the UE C-DRX operation may be the union of periods in which PDCCH monitoring is performed in each slot, such as the operating time of the aforementioned specific timer and/or the predefined onDuration. That is, the following description is given with the appreciation that an active period (or an active period related to a UE C-DRX configuration) is a time period in which scheduling may be expected due to the operation of the aforementioned timer and/or a predefined onDuration.

### 1. Method 1

Method 1 may be a method of determining whether to perform monitoring for DCI format 2_9 in a C-DRX inactive period (the remaining time period excluding an active period) based on a configuration scheme of DCI format 2_9.

As a method of performing monitoring for DCI format 2_9 based on a configuration scheme of DCI format 2_9, the following Method 1-1, Method 1-2, and Method 1-3 may be considered.
(1) Method 1-1: A method of performing monitoring for DCI format 2_9 in a C-DRX inactive period, when a CHO triggering bit is configured to be included in DCI format 2_9.

When the CHO triggering bit is configured to be included in DCI format 2_9, the UE may be allowed to perform monitoring for DCI format 2_9 even in the UE C-DRX inactive period. The CHO triggering bit may be configured to be included in DCI format 2_9 in at least one of the following cases.
- ① A case where an RRC parameter indicating a starting bit position for CHO triggering is additionally included in an RRC parameter indicating the starting bit position of an information block within DCI format 2_9 (in other words, a case where an RRC parameter for (starting) position indication, which informs a bit position for CHO triggering, is additionally configured in an RRC parameter indicating/informing the starting bit position of an information block within DCI format 2_9).
- ② A case where the bit width of an additional information block is configured in the RRC parameter indicating the starting bit position of an information block within DCI format 2_9.
- ③ A case where configuration information for a CHO triggering bit is provided through a separate RRC parameter.

That is, when a field/bit for a CHO triggering bit is (additionally) defined/configured in DCI format 2_9 through RRC signaling, the UE may perform monitoring for DCI format 2_9 in at least one monitoring occasion (MO) configured for DCI format 2_9 even in the inactive period.

(2) Method 1-2: A method of skipping monitoring for DCI format 2_9 in all or part of a C-DRX inactive period of a UE, when a CHO triggering bit is not configured to be included in DCI format 2_9.

When the CHO triggering bit is not configured to be included in DCI format 2_9, the UE may skip monitoring for DCI format 2_9 in the C-DRX inactive period of the UE.

Alternatively, when the CHO triggering bit is not configured to be included in DCI format 2_9, the UE may perform monitoring for DCI format 2_9 limitedly in only some of inactive periods. For example, the UE may perform monitoring for DCI format 2_9 in a UE C-DRX active period and some inactive periods described above. For example, the UE may monitor DCI format 2_9 only in MOs located in odd or even slots among all MOs (configured for DCI format 2_9) associated with the inactive periods. Alternatively, the UE may monitor DCI format 2_9 only once every N times (where N is a parameter previously configured/indicated by the BS) among all MOs associated with the inactive periods. For example, when the CHO triggering bit is not configured to be included in DCI format 2_9, the UE may exceptionally perform monitoring for DCI format 2_9 in MOs located in odd or even slots, or an N-th slot among all MOs configured for DCI format 2_9, even if the MOs correspond to an inactive period.

(3) Method 1-3: A method of configuring whether to monitor DCI format 2_9 in a UE C-DRX inactive period by a BS depending on the presence or absence of a CHO triggering bit.

The UE may be separately configured by the BS whether to monitor DCI format 2_9 in a UE C-DRX inactive period based on whether a CHO triggering bit is configured to be included in DCI format 2_9. For example, when the CHO triggering bit is configured to be included in DCI format 2_9, the BS may instruct/configure the UE to perform monitoring for DCI format 2_9 in the UE C-DRX inactive period. Alternatively, when the CHO triggering bit is configured to be included in DCI format 2_9, the BS may instruct/configure the UE not to perform monitoring for DCI format 2_9 in the UE C-DRX inactive period. Alternatively, when the CHO triggering bit is not configured to be included in DCI format 2_9, the BS may instruct/configure the UE to perform monitoring for DCI format 2_9 in the UE C-DRX inactive period. Alternatively, when the CHO triggering bit is not configured to be included in DCI format 2_9, the BS may instruct/configure the UE not to perform monitoring for DCI format 2_9 in the UE C-DRX inactive period.

(4) Method 1-4: A method of setting a monitoring periodicity of DCI format 2_9 for CHO triggering and a monitoring periodicity of DCI format 2_9 for cell DTX/DRX to be always the same or individually.

For example, the contents of DCI format 2_9 may include (de)activation bits + a CHO triggering bit in a specific MO of DCI format 2_9 and only the (de)activation bits in other MOs.

Specifically, monitoring periodicities may be set individually for DCI format 2_9 including the CHO triggering bit and DCI format 2_9 not including the CHO triggering bit. For example, the UE may be configured to always have the same monitoring periodicity for DCI format 2_9 for CHO triggering and DCI format 2_9 for cell DTX/DRX, regardless of the inclusion of the CHO triggering bit. Alternatively, the monitoring periodicity of DCI format 2_9 including the CHO triggering bit may be set to an integer multiple (or odd/even slots) of the monitoring periodicity of DCI format 2_9 for cell DTX/DRX. For example, the UE may be configured to monitor DCI format 2_9 including cell DTX/DRX (de)activation bits + a CHO triggering bit only in odd slots, and monitor DCI format 2_9 including only cell DTX/DRX (de)activation bits in the remaining MOs, among all MOs for DCI format 2_9.

(5) Method 1-5: A method of maintaining cell DTX/DRX in a previous activated/deactivated state (without reading the remaining bits in DCI format 2_9), when CHO is triggered, and (de)activating a cell DTX/DRX configuration according to a cell DTX/DRX indication for each information block included in DCI format 2_9, when CHO is not triggered.

Characteristically, when CHO is triggered through DCI format 2_9, cell DTX/DRX may be maintained in a previous activated/deactivated state (without reading a bit in DCI format 2_9). For example, when the UE recognizes that CHO is triggered through DCI format 2_9, it may maintain an activated cell in the activated state and a deactivated cell in the deactivated state without decoding the remaining bits of DCI format 2_9. When CHO is not triggered, the UE may activate/deactivate the cell DTX/DRX according to a cell DTX/DRX activation or deactivation indication for each information block within DCI format 2_9.

### 2. Method 2

Method 2 relates to a method of performing monitoring for DCI format 2_9 based on a wake-up indicator or wake-up indication of DCI format 2_6. For example, the UE may determine whether to perform monitoring for DCI format 2_9 in an inactive period based on a monitoring result of DCI format 2_6.

DCI format 2_6 is scrambled with a power saving RNTI (PS-RNTI), and the starting position of a block to be read (monitored) by each UE in DCI format 2_6 may be determined/configured by a parameter, ps-PositionDCI-2-6. The block for each UE may include a wake-up indication field and an Scell dormancy indication field. When a 1-bit wake-up indication in the wake-up indication field is 0, a timer (i.e., drx-onDurationTimer) for a next (long) DRX cycle does not start, and when the 1-bit wake-up indication in the wake-up indication field is 1, the timer for the next (long) DRX cycle may start. The UE may monitor scheduling information from the BS while the timer is running. An Scell dormancy indication may be configured as a bitmap, and the size of the bitmap may be determined according to a DormancyGroupID configuration.

Further, DCI format 2_6 may be transmitted (received from the perspective of the UE) only in a period (i.e., a C-DRX inactive period) other than an active period of the UE, and the size of DCI format 2_6 may be determined by a parameter (RRC parameter), sizeDCI-2-6. Further, for a UE configured to monitor DCI format 2_6, a default behavior may be configured for a case where DCI format 2_6 is not detected or monitored. For example, either a 'wake-up' or a 'go-to-sleep' operation may be set as the default behavior for the UE.

As described above, a UE configured with UE C-DRX may perform PDCCH monitoring in every slot only during a time period based on a preconfigured onDuration for power saving and a time period based on a retransmission/inactivity timer (i.e., an active period). Exceptionally, only when the UE is configured to monitor DCI format 2_6, the UE may perform PDCCH monitoring (i.e., monitoring of DCI format 2_6) in a period (or an inactive period) other than the active period, and perform monitoring for the remaining DCI formats including DCI format 2_9 only during the active period. Therefore, the cell DTX/DRX (de)activation indication and CHO triggering indication of the BS may be transmitted/received only within a limited time period.

When the number of UEs connected to a cell is small or there is little data activity depending on a cell condition (e.g., late at night) from the perspective of a BS operation, it is necessary to increase the ES gain of the BS through cell DTX/DRX activation and/or cell OFF. That is, the BS may need to trigger cell DTX/DRX activation and/or CHO for UEs through DCI format 2_9. However, when the BS intends to dynamically indicate cell OFF and/or cell DTX/DRX activation in a period other than an active period, the BS should wait until an onDuration (or active period) of a UE configured with UE C-DRX to transmit DCI format 2_9. Therefore, the delay of HO and/or the delay of cell DTX/DRX activation may be unnecessarily increased. In addition, since a UE C-DRX configuration is UE-specific, the onDuration (or active period) may differ for each UE within the cell. In this case, since the BS may not be able to provide an immediate CHO triggering indication depending on a situation within the cell, a delay may occur in power off of the BS, and the ES gain of the BS/UE may be significantly reduced.

Therefore, for energy saving of the UE and/or the BS, the UE may need to exceptionally perform monitoring for DCI format 2_9 even in an inactive period based on a monitoring result of DCI format 2_6. For example, the UE may determine whether to perform monitoring for DCI format 2_9 in the C-DRX inactive period in connection with the wake-up indication field of DCI format 2_6 or the default behavior when DCI format 2_6 is not detected/monitored. In this case, flexible monitoring may be configured/determined by considering the trade-off between the power saving of the BS and the UE and the immediate cell DTX/DRX and/or CHO triggering indication.

In this regard, at least one of the following methods may be considered.
(1) Method 2-1: DCI format 2_9 is monitored based on wake-up being indicated by the detected/received DCI format 2_6.

When the wake-up indication (or wake-up indicator) included in the detected/received DCI format 2_6 indicates 'wake-up (i.e., start of drx-onDurationTimer)', the UE may perform monitoring for DCI format 2_9 during an onDuration and a C-DRX inactive period associated with the onDuration.

For example, when the wake-up indication in the monitored DCI format 2_6 indicates 'wake-up', the UE may be configured to perform monitoring for DCI format 2_9 in both the onDuration and the associated UE C-DRX inactive period. In other words, when the bit value of the wake-up indication field in DCI format 2_6 indicates 'wake-up' (i.e., when a bit value of 1 indicating the start of drx-onDurationTimer is set), the UE performs monitoring for other PDCCHs including DCI format 2_9 in a subsequent onDuration (i.e., an onDuration for which wake-up was indicated), and an MO may be configured that allows the UE to exceptionally perform monitoring for DCI format 2_9 in all (or part) of the UE C-DRX inactive period (from the end of the onDuration for which wake-up was indicated until the next (periodic) onDuration). For example, upon receipt of DCI in DCI format 2_6 (or PDCCH including the DCI) with a bit value of 1 indicating the start of drx-onDurationTimer, the UE may perform monitoring for DCI format 2_9 at MOs configured for DCI format 2_9 within the operation time of the drx-onDurationTimer (an onDuration or an active period) and an inactive period (after expiration of the drx-onDurationTimer and before the next onDuration).

(2) Method 2-2: Monitoring of DCI format 2_9 is skipped based on 'go-to-sleep' being indicated by detected/received DCI format 2_6.

In contrast, when the wake-up indication included in the received/detected DCI format 2_6 indicates 'go-to-sleep' (or a bit value of 0 indicating that drx-onDurationTimer does not start), the UE may skip monitoring of DCI format 2_9 in an onDuration for which go-to-sleep was indicated and a UE C-DRX inactive period associated with the onDuration.

(3) Method 2-3: Limited monitoring of DCI format 2_9 is performed based on 'go-to-sleep' being indicated by detected/received DCI format 2_6.

In Method 2-3, the UE may exceptionally perform monitoring for DCI format 2_9 during an onDuration for which 'go-to-sleep' has been indicated by the wake-up indication.

Specifically, when the wake-up indication of DCI format 2_6 indicates 'go-to-sleep', the UE may maintain a sleep state without performing PDCCH monitoring for the remaining DCI formats (excluding DCI format 2_9) during a subsequent onDuration (i.e., an onDuration for which the wake-up indication indicates 'go-to-sleep' or an 'Off' onDuration). That is, the UE may exceptionally perform monitoring for DCI format 2_9 only during an onDuration that is turned 'Off' by the wake-up indication. However, the UE may skip monitoring of DCI format 2_9 during a C-DRX inactive period associated with the 'Off' onDuration.

Alternatively, it may be separately configured whether to perform monitoring for DCI format 2_9 when the wake-up indication of DCI format 2_6 indicates 'go-to-sleep'. For example, even if the wake-up indication of DCI format 2_6 indicates 'go-to-sleep', the BS may configure the UE to perform monitoring for DCI format 2_9 in an associated UE C-DRX inactive period.

Alternatively, configuration information regarding whether to perform monitoring for DCI format 2_9 throughout the 'Off' onDuration (turned 'Off' by the wake-up indication of DCI format 2_6) and its associated UE C-DRX inactive period (or in each of the onDuration and the inactive period) may be provided in advance.

(4) Method 2-4: It is determined whether to perform monitoring for DCI format 2_9 based on a UE C-DRX periodicity or the length of an inactive period.

The UE may determine whether to perform monitoring for DCI format 2_9 based on a UE C-DRX periodicity or the length of an inactive period (e.g., a short/long DRX cycle).

Specifically, the UE may determine whether to perform monitoring for DCI format 2_9 in a UE-C-DRX inactive period based on a UE C-DRX cycle or the length of the inactive period. For example, a UE configured with a short DRX cycle may not perform monitoring at an MO of DCI format 2_9 configured for the inactive period because the length from one onDuration to the next (periodic) onDuration is short. Conversely, when the length of the inactive period is relatively long because a short DRX cycle is not configured for the UE (e.g., long DRX cycle), the UE may perform monitoring at an MO of DCI format 2_9 configured in the inactive period. Alternatively, considering the power-saving aspect of a UE, the UE may not perform monitoring at an MO of DCI format 2_9 configured in an inactive period, when configured with a long DRX cycle, and may perform monitoring at an MO of DCI format 2_9 configured in the inactive period, only when configured with a short DRX cycle.

Alternatively, whether to perform monitoring for DCI format 2_9 in an inactive period may be determined according to a DRX cycle periodicity of UE C-DRX. For example, when a specific threshold is preset, if the UE C-DRX cycle is greater than the specific threshold (is greater than or equal to, or exceeds the specific threshold), the UE may perform monitoring for DCI format 2_9 in the inactive period. In contrast, when the UE C-DRX cycle is smaller than the specific threshold (less than or equal to, or below the specific threshold), the UE may skip monitoring of DCI format 2_9 in the inactive period. Alternatively, considering the power-saving aspect of the UE, when a specific threshold is preset and the UE C-DRX cycle is smaller than the specific threshold (less than or equal to, or below the specific threshold), the UE may perform monitoring for DCI format 2_9 in the inactive period. In contrast, when the UE C-DRX cycle is greater than the specific threshold (is greater than or equal to, or exceeds the specific threshold), the UE may skip monitoring of DCI format 2_9 in the inactive period.

(5) Method 2-5: It is determined whether to monitor DCI format 2_9 based on a default behavior, when DCI format 2_6 is not detected/received.

The UE may determine whether to monitor DCI format 2_9 based on at least one of the aforementioned methods (Methods 2-1, 2-2, 2-3, and 2-4) in conjunction with a default behavior configured for a case where DCI format 2_6 is not received/detected.

Specifically, for energy saving, the BS does not always transmit DCI (e.g., DCI format 2_6) at every MO configured for DCI format 2_6. Accordingly, a default behavior regarding whether the UE should 'wake up' or 'go to sleep' when DCI format 2_6 is not detected may be configured. In this case, the UE may determine whether to monitor DCI format 2_9 by applying at least one of the aforementioned methods (Methods 2-1, 2-2, 2-3, and 2-4) based on the default behavior configured for when DCI format 2_6 is not received/detected.

For example, when the default behavior is configured as 'go-to-sleep' and DCI format 2_6 is not detected/found/received, Method 2-2 and/or Method 2-3 may be applied based on the go-to-sleep default behavior. Alternatively, when the default behavior is configured as 'wake-up' and DCI format 2_6 is not detected/found/received, Method 2-1 may be applied based on the wake-up default behavior.

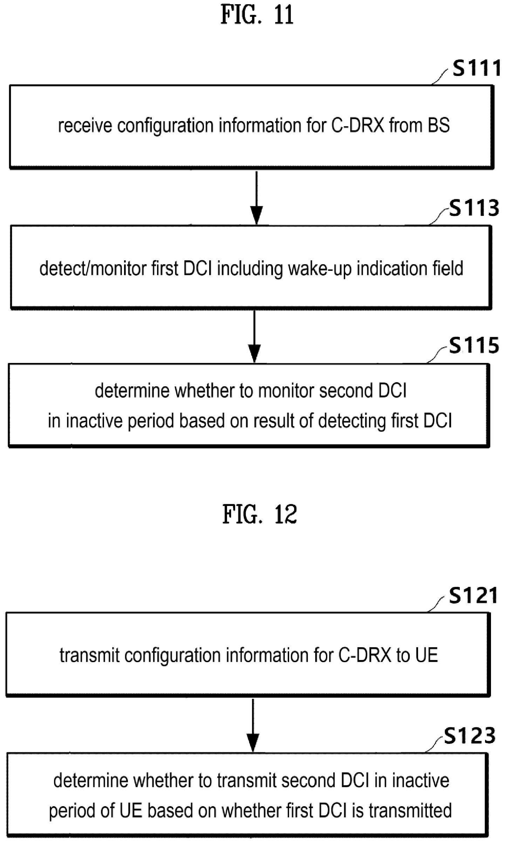

FIG. 11 is a diagram illustrating a method for monitoring second DCI by a UE.

As described above, the UE may perform an operation related to DRX based on a C-DRX configuration even during an RRC connection with a BS. The UE may transition to a wake-up or sleep state based on an active period (or C-DRX active period) and an inactive period (or C-DRX inactive period) according to the C-DRX configuration. For example, the UE may determine the active period based on an onDuration configured by drx-StartOffset and drx-SlotOffset included in configuration information, as well as a DRX-related timer (onDurationTimer, drx-InactivityTimer, shortDRX-CycleTimer, or the like), and determine the remaining period excluding the active period in a DRX cycle as an inactive period. Hereinafter, reception/monitoring of DCI may correspond to reception/monitoring of a PDCCH including the DCI.

Specifically, referring to FIG. 11, the UE may receive configuration information for C-DRX from the BS (S111). As described with reference to FIG. 7, the configuration information may include parameters such as on-duration, onDurationTimer, drx-InactivityTimer, drx-RetransmissionTimer, longDRX-Cycle, drxStartOffset, drxShortCycleTimer, shortDRX-Cycle, and drx-SlotOffset.

The UE configured with C-DRX may detect/monitor first DCI including a wake-up indication field (S113). The first DCI may be DCI format 2_6 including wake-up indication information indicating whether the UE should wake up or sleep in an active period based on the configuration information. For example, when a first bit value related to wake-up (e.g., 1) is included in the wake-up indication field/information, the UE may start the onDurationTimer and perform monitoring for all PDCCHs including DCI while the onDurationTimer is running. As described above, the first DCI is DCI that may be exceptionally transmitted in an inactive period, and the UE may detect/monitor whether the first DCI is received at a predefined timing (e.g., an MO configured for monitoring the first DCI) within the inactive period.

Subsequently, the UE may determine whether to monitor second DCI related to cell DRX/DTX in an inactive period configured through the configuration information based on a detection result of the first DCI (S115). For example, the UE configured with C-DRX may determine whether to monitor the second DCI (e.g., DCI format 2_9) for activation/deactivation of a cell DRX/DTX configuration in connection with the monitoring/detection result of the first DCI. That is, to minimize the delay of operations for energy saving of the BS and/or the UE, the UE may exceptionally monitor the second DCI in a specific case even in the inactive period. For example, as in Method 2, the UE may determine whether to exceptionally monitor the second DCI in the inactive period based on the monitoring result of the first DCI. Alternatively, as in Method 1 described above, the UE may determine whether to exceptionally monitor the second DCI in the inactive period based on whether a CHO triggering bit is configured to be included for the second DCI.

Specifically, when the first DCI including indication information indicating wake-up is detected during a specific onDuration (i.e., an onDuration of a DRX cycle starting after detection of the first DCI), the UE performs monitoring for the second DCI in an inactive period associated with the specific onDuration (in the remaining period excluding the specific onDuration indicated by the first DCI in the DRX cycle, or a period from the end of the specific onDuration to the start of the specific onDuration of the next cycle).

For example, when the first DCI including the wake-up indication information having a bit value related to wake-up is detected, the UE may start the onDurationTimer and transition to a wake-up state. In this case, the UE may perform monitoring for the second DCI even in the inactive period from a time point when the onDurationTimer expires until before the start of the onDuration of the next cycle. That is, the UE may perform monitoring for the second DCI in both the active period for which wake-up is indicated by the first DCI and the corresponding inactive period.

As described above, the onDuration and its corresponding/associated inactive period related to monitoring of the second DCI refer to the onDuration and the remaining period of the DRX cycle that starts after the monitoring of the first DCI (e.g., the remaining period excluding the onDuration in the DRX cycle). The following description is given with the appreciation that the onDuration refers to the onDuration of the DRX cycle starting after a time point when the monitoring of the first DCI is performed.

Specifically, when the first DCI including indication information indicating sleep is detected in the onDuration, the UE may skip monitoring of the second DCI in the inactive period associated with the onDuration. For example, when the first DCI including the wake-up indication information having a bit value related to sleep is detected, the UE may maintain a sleep state during the onDuration without starting the onDurationTimer. In this case, the UE may skip monitoring of the second DCI not only during the onDuration but also during the associated inactive period. Alternatively, the UE may exceptionally perform monitoring for the second DCI only during the onDuration and skip monitoring of the second DCI in the inactive period associated with the onDuration.

Alternatively, the UE may fail to detect the first DCI. In this case, as described above, the UE may determine whether to monitor a PDCCH including DCI during the onDuration based on a preset default behavior. For example, when wake-up is set as the default behavior for the UE, the UE may wake up during the onDuration to monitor the PDCCH when the first DCI is not detected. In this case, monitoring of the second DCI may be exceptionally performed even in the inactive period associated with the onDuration. In contrast, when sleep is set as the default behavior for the UE, the UE sleeps during the onDuration when the first DCI is not detected, and monitoring of the second DCI may be skipped in the inactive period associated with the onDuration (or "Off" onDuration) for which sleep is indicated.

FIG. 12 is a diagram illustrating a method for transmitting second DCI to a UE by a BS.

Referring to FIG. 12, the BS may transmit configuration information for C-DRX to the UE (S121). As described with reference to FIG. 7, the configuration information may include parameters such as on-duration, onDurationTimer, drx-InactivityTimer, drx-RetransmissionTimer, longDRX-Cycle, drxStartOffset, drxShortCycleTimer, shortDRX-Cycle, and drx-SlotOffset.

The BS may then determine whether to transmit second DCI in an inactive period configured for the UE based on whether first DCI has been transmitted (S123). Alternatively, as in Method 1 described before, the BS may determine whether to exceptionally transmit the second DCI in the inactive period based on whether a CHO triggering bit is configured to be included in the second DCI.

For example, when the BS has transmitted the first DCI to the UE, the BS may determine whether to transmit the second DCI in an inactive period associated with an onDuration indicated by the first DCI, based on wake-up indication information included in the first DCI. For example, when the first DCI including wake-up indication information having a bit value indicating wake-up is transmitted, the BS may transmit the second DCI to the UE even in the associated inactive period. Alternatively, when the BS has transmitted the first DCI including wake-up indication information having a bit value indicating sleep to the UE, the BS may not transmit the second DCI in the inactive period. Alternatively, the BS may exceptionally transmit the second DCI only during an onDuration for which sleep is indicated.

Alternatively, when the BS has not transmitted the first DCI to the UE, it may determine whether to transmit the second DCI in the inactive period based on a default behavior configured for the UE. For example, when wake-up is set as the default behavior for the UE, the BS may transmit the second DCI in the inactive period. In contrast, when sleep is set as the default behavior for the UE, the BS may skip the transmission of the second DCI in the inactive period.

In this way, the proposed disclosure may minimize a delay in applying cell DRX/DTX caused by a C-DRX operation of a UE. Alternatively, the proposed disclosure may minimize a delay in performing a cell DRX operation due to the C-DRX operation of the UE by exceptionally allowing the UE to monitor DCI format 2_9 in an inactive period. Alternatively, the proposed disclosure may flexibly schedule whether to transmit DCI format 2_9 in the inactive period based on DCI format 2_6.

### Communication system example to which the present disclosure is applied

Although not limited thereto, various descriptions, functions, procedures, proposals, methods, and/or operational flow charts of the present disclosure disclosed in this document may be applied to various fields requiring wireless communication/connection (5G) between devices.

Hereinafter, it will be illustrated in more detail with reference to the drawings. In the following drawings/description, the same reference numerals may exemplify the same or corresponding hardware blocks, software blocks, or functional blocks, unless otherwise indicated.

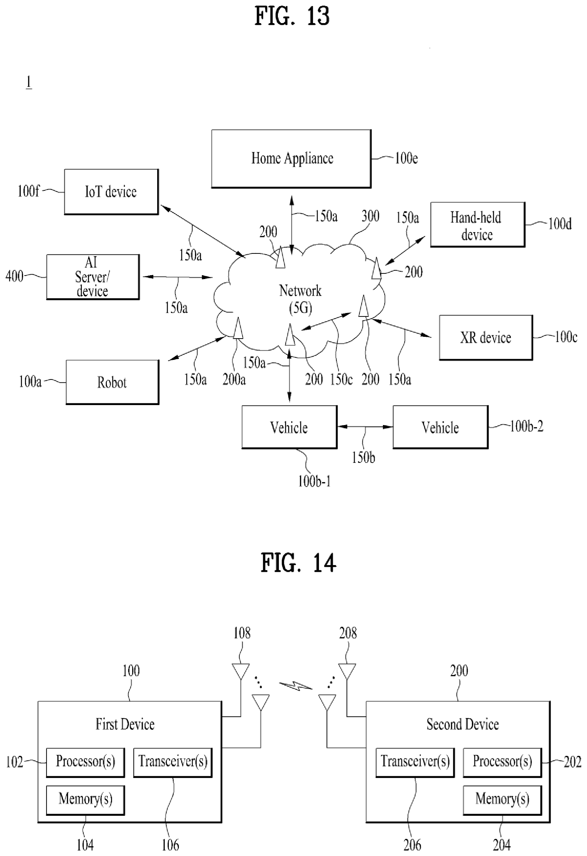

FIG. 13 illustrates a communication system applied to the present disclosure.

Referring to FIG. 13, a communication system 1 applied to the present disclosure includes wireless devices, Base Stations (BSs), and a network. Herein, the wireless devices represent devices performing communication using Radio Access Technology (RAT) (e.g., 5G New RAT (NR)) or Long-Term Evolution (LTE)) and may be referred to as communication/radio/5G devices. The wireless devices may include, without being limited to, a robot 100a, vehicles 100b-1 and 100b-2, an eXtended Reality (XR) device 100c, a hand-held device 100d, a home appliance 100e, an Internet of Things (IoT) device 100f, and an Artificial Intelligence (AI) device/server 400. For example, the vehicles may include a vehicle having a wireless communication function, an autonomous driving vehicle, and a vehicle capable of performing communication between vehicles. Herein, the vehicles may include an Unmanned Aerial Vehicle (UAV) (e.g., a drone). The XR device may include an Augmented Reality (AR)/Virtual Reality (VR)/Mixed Reality (MR) device and may be implemented in the form of a Head-Mounted Device (HMD), a Head-Up Display (HUD) mounted in a vehicle, a television, a smartphone, a computer, a wearable device, a home appliance device, a digital signage, a vehicle, a robot, etc. The hand-held device may include a smartphone, a smartpad, a wearable device (e.g., a smartwatch or a smartglasses), and a computer (e.g., a notebook). The home appliance may include a TV, a refrigerator, and a washing machine. The IoT device may include a sensor and a smartmeter. For example, the BSs and the network may be implemented as wireless devices and a specific wireless device 200a may operate as a BS/network node with respect to other wireless devices.

The wireless devices 100a to 100f may be connected to the network 300 via the BSs 200. An AI technology may be applied to the wireless devices 100a to 100f and the wireless devices 100a to 100f may be connected to the AI server 400 via the network 300. The network 300 may be configured using a 3G network, a 4G (e.g., LTE) network, or a 5G (e.g., NR) network. Although the wireless devices 100a to 100f may communicate with each other through the BSs 200/network 300, the wireless devices 100a to 100f may perform direct communication (e.g., sidelink communication) with each other without passing through the BSs/network. For example, the vehicles 100b-1 and 100b-2 may perform direct communication (e.g. Vehicle-to-Vehicle (V2V)/Vehicle-to-everything (V2X) communication). The IoT device (e.g., a sensor) may perform direct communication with other IoT devices (e.g., sensors) or other wireless devices 100a to 100f.

Wireless communication/connections 150a, 150b, or 150c may be established between the wireless devices 100a to 100f/BS 200, or BS 200/BS 200. Herein, the wireless communication/connections may be established through various RATs (e.g., 5G NR) such as uplink/downlink communication 150a, sidelink communication 150b (or, D2D communication), or inter BS communication (e.g. relay, Integrated Access Backhaul (IAB)). The wireless devices and the BSs/the wireless devices may transmit/receive radio signals to/from each other through the wireless communication/connections 150a and 150b. For example, the wireless communication/connections 150a and 150b may transmit/receive signals through various physical channels. To this end, at least a part of various configuration information configuring processes, various signal processing processes (e.g., channel encoding/decoding, modulation/demodulation, and resource mapping/demapping), and resource allocating processes, for transmitting/receiving radio signals, may be performed based on the various proposals of the present disclosure.

### Examples of wireless devices to which the present disclosure is applied

FIG. 14 illustrates a wireless device applicable to the present disclosure.

Referring to FIG. 14, a first wireless device 100 and a second wireless device 200 may transmit radio signals through a variety of RATs (e.g., LTE and NR). Herein, {the first wireless device 100 and the second wireless device 200} may correspond to {the wireless device 100x and the BS 200} and/or {the wireless device 100x and the wireless device 100x} of FIG. 13.

The first wireless device 100 may include one or more processors 102 and one or more memories 104 and additionally further include one or more transceivers 106 and/or one or more antennas 108. The processor(s) 102 may control the memory(s) 104 and/or the transceiver(s) 106 and may be configured to implement the descriptions, functions, procedures, proposals, methods, and/or operational flowcharts disclosed in this document. For example, the processor(s) 102 may process information within the memory(s) 104 to generate first information/signals and then transmit radio signals including the first information/signals through the transceiver(s) 106. The processor(s) 102 may receive radio signals including second information/signals through the transceiver 106 and then store information acquired by processing the second information/signals in the memory(s) 104. The memory(s) 104 may be connected to the processor(s) 102 and may store a variety of information related to operations of the processor(s) 102. For example, the memory(s) 104 may store software code including commands for performing a part or the entirety of processes controlled by the processor(s) 102 or for performing the descriptions, functions, procedures, proposals, methods, and/or operational flowcharts disclosed in this document. Herein, the processor(s) 102 and the memory(s) 104 may be a part of a communication modem/circuit/chip designed to implement RAT (e.g., LTE or NR). The transceiver(s) 106 may be connected to the processor(s) 102 and transmit and/or receive radio signals through one or more antennas 108. Each of the transceiver(s) 106 may include a transmitter and/or a receiver. The transceiver(s) 106 may be interchangeably used with Radio Frequency (RF) unit(s). In the present disclosure, the wireless device may represent a communication modem/circuit/chip.

Specifically, the first wireless device or UE 100 may include the processor 102 connected to the transceiver 106, and the memory 104. The memory 104 may include at least one program for performing an operation related to the embodiments described with reference to FIGS. 10 to 12.

The processor 102 may control the transceiver 106 to receive configuration information for C-DRX from a BS, detect first DCI including wake-up indication information, and determine whether to monitor second DCI related to cell DRX or cell DTX in an inactive period configured by the configuration information, based on a result of detecting the first DCI.

Alternatively, a processing device for controlling a UE may be configured, including the processor 102 and the memory 104. In this case, the processing device may include at least one processor and at least one memory connected to the at least one processor and storing instructions that, based on being executed by the at least one processor, cause the UE to receive configuration information for C-DRX from a BS, detect first DCI including wake-up indication information, and determine whether to monitor second DCI related to cell DRX or cell DTX in an inactive period configured by the configuration information, based on a result of detecting the first DCI.

The second wireless device 200 may include one or more processors 202 and one or more memories 204 and additionally further include one or more transceivers 206 and/or one or more antennas 208. The processor(s) 202 may control the memory(s) 204 and/or the transceiver(s) 206 and may be configured to implement the descriptions, functions, procedures, proposals, methods, and/or operational flowcharts disclosed in this document. For example, the processor(s) 202 may process information within the memory(s) 204 to generate third information/signals and then transmit radio signals including the third information/signals through the transceiver(s) 206. The processor(s) 202 may receive radio signals including fourth information/signals through the transceiver(s) 106 and then store information acquired by processing the fourth information/signals in the memory(s) 204. The memory(s) 204 may be connected to the processor(s) 202 and may store a variety of information related to operations of the processor(s) 202. For example, the memory(s) 204 may store software code including commands for performing a part or the entirety of processes controlled by the processor(s) 202 or for performing the descriptions, functions, procedures, proposals, methods, and/or operational flowcharts disclosed in this document. Herein, the processor(s) 202 and the memory(s) 204 may be a part of a communication modem/circuit/chip designed to implement RAT (e.g., LTE or NR). The transceiver(s) 206 may be connected to the processor(s) 202 and transmit and/or receive radio signals through one or more antennas 208. Each of the transceiver(s) 206 may include a transmitter and/or a receiver. The transceiver(s) 206 may be interchangeably used with RF unit(s). In the present disclosure, the wireless device may represent a communication modem/circuit/chip.

Specifically, the second wireless device or BS 200 may include the processor2102 connected to the transceiver or RF transceiver 206, and the memory 204. The memory 204 may include at least one program for performing an operation related to the embodiments described with reference to FIGS. 10 to 12.

The processor 202 may control the transceiver 206 to transmit configuration information for C-DRX to a UE, and determine whether to transmit second DCI related to cell DRX or cell DTX in an inactive period configured for the UE by the configuration information, based on whether first DCI including wake-up indication information is transmitted.

Hereinafter, hardware elements of the wireless devices 100 and 200 will be described more specifically. One or more protocol layers may be implemented by, without being limited to, one or more processors 102 and 202. For example, the one or more processors 102 and 202 may implement one or more layers (e.g., functional layers such as PHY, MAC, RLC, PDCP, RRC, and SDAP). The one or more processors 102 and 202 may generate one or more Protocol Data Units (PDUs) and/or one or more Service Data Unit (SDUs) according to the descriptions, functions, procedures, proposals, methods, and/or operational flowcharts disclosed in this document. The one or more processors 102 and 202 may generate messages, control information, data, or information according to the descriptions, functions, procedures, proposals, methods, and/or operational flowcharts disclosed in this document. The one or more processors 102 and 202 may generate signals (e.g., baseband signals) including PDUs, SDUs, messages, control information, data, or information according to the descriptions, functions, procedures, proposals, methods, and/or operational flowcharts disclosed in this document and provide the generated signals to the one or more transceivers 106 and 206. The one or more processors 102 and 202 may receive the signals (e.g., baseband signals) from the one or more transceivers 106 and 206 and acquire the PDUs, SDUs, messages, control information, data, or information according to the descriptions, functions, procedures, proposals, methods, and/or operational flowcharts disclosed in this document.

The one or more processors 102 and 202 may be referred to as controllers, microcontrollers, microprocessors, or microcomputers. The one or more processors 102 and 202 may be implemented by hardware, firmware, software, or a combination thereof. As an example, one or more Application Specific Integrated Circuits (ASICs), one or more Digital Signal Processors (DSPs), one or more Digital Signal Processing Devices (DSPDs), one or more Programmable Logic Devices (PLDs), or one or more Field Programmable Gate Arrays (FPGAs) may be included in the one or more processors 102 and 202. The descriptions, functions, procedures, proposals, methods, and/or operational flowcharts disclosed in this document may be implemented using firmware or software and the firmware or software may be configured to include the modules, procedures, or functions. Firmware or software configured to perform the descriptions, functions, procedures, proposals, methods, and/or operational flowcharts disclosed in this document may be included in the one or more processors 102 and 202 or stored in the one or more memories 104 and 204 so as to be driven by the one or more processors 102 and 202. The descriptions, functions, procedures, proposals, methods, and/or operational flowcharts disclosed in this document may be implemented using firmware or software in the form of code, commands, and/or a set of commands.

The one or more memories 104 and 204 may be connected to the one or more processors 102 and 202 and store various types of data, signals, messages, information, programs, code, instructions, and/or commands. The one or more memories 104 and 204 may be configured by Read-Only Memories (ROMs), Random Access Memories (RAMs), Electrically Erasable Programmable Read-Only Memories (EPROMs), flash memories, hard drives, registers, cash memories, computer-readable storage media, and/or combinations thereof. The one or more memories 104 and 204 may be located at the interior and/or exterior of the one or more processors 102 and 202. The one or more memories 104 and 204 may be connected to the one or more processors 102 and 202 through various technologies such as wired or wireless connection.

The one or more transceivers 106 and 206 may transmit user data, control information, and/or radio signals/channels, mentioned in the methods and/or operational flowcharts of this document, to one or more other devices. The one or more transceivers 106 and 206 may receive user data, control information, and/or radio signals/channels, mentioned in the descriptions, functions, procedures, proposals, methods, and/or operational flowcharts disclosed in this document, from one or more other devices. For example, the one or more transceivers 106 and 206 may be connected to the one or more processors 102 and 202 and transmit and receive radio signals. For example, the one or more processors 102 and 202 may perform control so that the one or more transceivers 106 and 206 may transmit user data, control information, or radio signals to one or more other devices. The one or more processors 102 and 202 may perform control so that the one or more transceivers 106 and 206 may receive user data, control information, or radio signals from one or more other devices. The one or more transceivers 106 and 206 may be connected to the one or more antennas 108 and 208 and the one or more transceivers 106 and 206 may be configured to transmit and receive user data, control information, and/or radio signals/channels, mentioned in the descriptions, functions, procedures, proposals, methods, and/or operational flowcharts disclosed in this document, through the one or more antennas 108 and 208. In this document, the one or more antennas may be a plurality of physical antennas or a plurality of logical antennas (e.g., antenna ports). The one or more transceivers 106 and 206 may convert received radio signals/channels etc. from RF band signals into baseband signals in order to process received user data, control information, radio signals/channels, etc. using the one or more processors 102 and 202. The one or more transceivers 106 and 206 may convert the user data, control information, radio signals/channels, etc. processed using the one or more processors 102 and 202 from the base band signals into the RF band signals. To this end, the one or more transceivers 106 and 206 may include (analog) oscillators and/or filters.

### Examples of wireless devices to which the present disclosure is applied

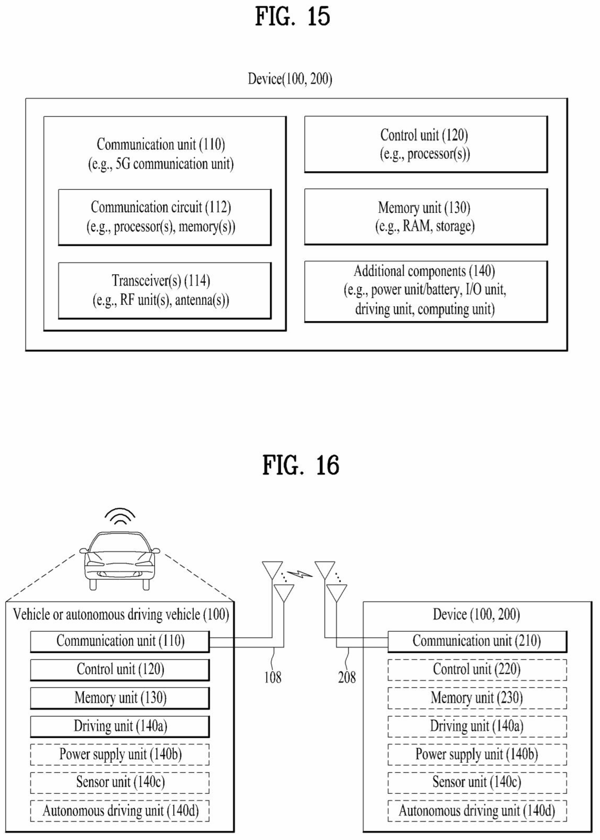

FIG. 15 illustrates another example of a wireless device applied to the present disclosure. The wireless device may be implemented in various forms according to a use-case/service (refer to FIG. 16).

Referring to FIG. 15, wireless devices 100 and 200 may correspond to the wireless devices 100 and 200 of FIG. 14 and may be configured by various elements, components, units/portions, and/or modules. For example, each of the wireless devices 100 and 200 may include a communication unit 110, a control unit 120, a memory unit 130, and additional components 140. The communication unit may include a communication circuit 112 and transceiver(s) 114. For example, the communication circuit 112 may include the one or more processors 102 and 202 and/or the one or more memories 104 and 204 of FIG. 14. For example, the transceiver(s) 114 may include the one or more transceivers 106 and 206 and/or the one or more antennas 108 and 208 of FIG. 14. The control unit 120 is electrically connected to the communication unit 110, the memory 130, and the additional components 140 and controls overall operation of the wireless devices. For example, the control unit 120 may control an electric/mechanical operation of the wireless device based on programs/code/commands/information stored in the memory unit 130. The control unit 120 may transmit the information stored in the memory unit 130 to the exterior (e.g., other communication devices) via the communication unit 110 through a wireless/wired interface or store, in the memory unit 130, information received through the wireless/wired interface from the exterior (e.g., other communication devices) via the communication unit 110.

The additional components 140 may be variously configured according to types of wireless devices. For example, the additional components 140 may include at least one of a power unit/battery, input/output (I/O) unit, a driving unit, and a computing unit. The wireless device may be implemented in the form of, without being limited to, the robot (100a of FIG. 13), the vehicles (100b-1 and 100b-2 of FIG. 13), the XR device (100c of FIG. 13), the hand-held device (100d of FIG. 13), the home appliance (100e of FIG. 13), the IoT device (100f of FIG. 13), a digital broadcast terminal, a hologram device, a public safety device, an MTC device, a medicine device, a fintech device (or a finance device), a security device, a climate/environment device, the AI server/device (400 of FIG. 13), the BSs (200 of FIG. 13), a network node, etc. The wireless device may be used in a mobile or fixed place according to a use-example/service.

In FIG. 15, the entirety of the various elements, components, units/portions, and/or modules in the wireless devices 100 and 200 may be connected to each other through a wired interface or at least a part thereof may be wirelessly connected through the communication unit 110. For example, in each of the wireless devices 100 and 200, the control unit 120 and the communication unit 110 may be connected by wire and the control unit 120 and first units (e.g., 130 and 140) may be wirelessly connected through the communication unit 110. Each element, component, unit/portion, and/or module within the wireless devices 100 and 200 may further include one or more elements. For example, the control unit 120 may be configured by a set of one or more processors. As an example, the control unit 120 may be configured by a set of a communication control processor, an application processor, an Electronic Control Unit (ECU), a graphical processing unit, and a memory control processor. As another example, the memory 130 may be configured by a Random Access Memory (RAM), a Dynamic RAM (DRAM), a Read Only Memory (ROM)), a flash memory, a volatile memory, a non-volatile memory, and/or a combination thereof.

### Examples of vehicles or autonomous vehicles to which the present disclosure is applied

FIG. 16 illustrates a vehicle or an autonomous driving vehicle applied to the present disclosure. The vehicle or autonomous driving vehicle may be implemented by a mobile robot, a car, a train, a manned/unmanned Aerial Vehicle (AV), a ship, etc.

Referring to FIG. 16, a vehicle or autonomous driving vehicle 100 may include an antenna unit 108, a communication unit 110, a control unit 120, a driving unit 140a, a power supply unit 140b, a sensor unit 140c, and an autonomous driving unit 140d. The antenna unit 108 may be configured as a part of the communication unit 110. The blocks 110/130/140a to 140d correspond to the blocks 110/130/140 of FIG. 15, respectively.

The communication unit 110 may transmit and receive signals (e.g., data and control signals) to and from external devices such as other vehicles, BSs (e.g., gNBs and road side units), and servers. The control unit 120 may perform various operations by controlling elements of the vehicle or the autonomous driving vehicle 100. The control unit 120 may include an Electronic Control Unit (ECU). Also, the driving unit 140a may cause the vehicle or the autonomous driving vehicle 100 to drive on a road. The driving unit 140a may include an engine, a motor, a powertrain, a wheel, a brake, a steering device, etc. The power supply unit 140b may supply power to the vehicle or the autonomous driving vehicle 100 and include a wired/wireless charging circuit, a battery, etc. The sensor unit 140c may acquire a vehicle state, ambient environment information, user information, etc. The sensor unit 140c may include an Inertial Measurement Unit (IMU) sensor, a collision sensor, a wheel sensor, a speed sensor, a slope sensor, a weight sensor, a heading sensor, a position module, a vehicle forward/backward sensor, a battery sensor, a fuel sensor, a tire sensor, a steering sensor, a temperature sensor, a humidity sensor, an ultrasonic sensor, an illumination sensor, a pedal position sensor, etc. The autonomous driving unit 140d may implement technology for maintaining a lane on which a vehicle is driving, technology for automatically adjusting speed, such as adaptive cruise control, technology for autonomously driving along a determined path, technology for driving by automatically setting a path if a destination is set, and the like.

For example, the communication unit 110 may receive map data, traffic information data, etc. from an external server. The autonomous driving unit 140d may generate an autonomous driving path and a driving plan from the acquired data. The control unit 120 may control the driving unit 140a such that the vehicle or the autonomous driving vehicle 100 may move along the autonomous driving path according to the driving plan (e.g., speed/direction control). In the middle of autonomous driving, the communication unit 110 may aperiodically/periodically acquire recent traffic information data from the external server and acquire surrounding traffic information data from neighboring vehicles. In the middle of autonomous driving, the sensor unit 140c may obtain a vehicle state and/or surrounding environment information. The autonomous driving unit 140d may update the autonomous driving path and the driving plan based on the newly acquired data/information. The communication unit 110 may transfer information about a vehicle position, the autonomous driving path, and/or the driving plan to the external server. The external server may predict traffic information data using AI technology, etc., based on the information collected from vehicles or autonomous driving vehicles and provide the predicted traffic information data to the vehicles or the autonomous driving vehicles.

Here, wireless communication technologies implemented in the wireless devices (XXX, YYY) of the present specification may include LTE, NR, and 6G, as well as Narrowband Internet of Things for low power communication. At this time, for example, the NB-IoT technology may be an example of a Low Power Wide Area Network (LPWAN) technology, and may be implemented in standards such as LTE Cat NB1 and/or LTE Cat NB2, and is not limited to the above-described names. Additionally or alternatively, the wireless communication technology implemented in the wireless devices (XXX, YYY) of the present specification may perform communication based on LTE-M technology. In this case, as an example, the LTE-M technology may be an example of LPWAN technology, and may be referred to by various names such as eMTC (enhanced machine type communication). For example, LTE-M technology may be implemented in at least one of a variety of standards, such as 1) LTE CAT 0, 2) LTE Cat M1, 3) LTE Cat M2, 4) LTE non-BL (non-Bandwidth Limited), 5) LTE-MTC, 6) LTE Machine Type Communication, and/or 7) LTE M, and is not limited to the above-described names. Additionally or alternatively, the wireless communication technology implemented in the wireless devices (XXX, YYY) of the present specification is at least one of ZigBee, Bluetooth, and Low Power Wide Area Network (LPWAN) considering low power communication, and is not limited to the above-described names. As an example, ZigBee technology can generate personal area networks (PANs) related to small/low-power digital communication based on various standards such as IEEE 802.15.4, and may be called various names.

The embodiments described above are those in which components and features of the present disclosure are combined in a predetermined form. Each component or feature should be considered optional unless explicitly stated otherwise. Each component or feature may be implemented in a form that is not combined with other components or features. In addition, it is also possible to constitute an embodiment of the present disclosure by combining some components and/or features. The order of operations described in the embodiments of the present disclosure may be changed. Some configurations or features of one embodiment may be included in other embodiments, or may be replaced with corresponding configurations or features of other embodiments. It is obvious that the embodiments may be configured by combining claims that do not have an explicit citation relationship in the claims or may be included as new claims by amendment after filing.

In this document, embodiments of the present disclosure have been mainly described based on a signal transmission/reception relationship between a terminal and a base station. Such a transmission/reception relationship is extended in the same/similar manner to signal transmission/reception between a terminal and a relay or a base station and a relay. A specific operation described as being performed by a base station in this document may be performed by its upper node in some cases. That is, it is obvious that various operations performed for communication with a terminal in a network comprising a plurality of network nodes including a base station may be performed by the base station or network nodes other than the base station. The base station may be replaced by terms such as a fixed station, a Node B, an eNode B (eNB), an access point, and the like. In addition, the terminal may be replaced with terms such as User Equipment (UE), Mobile Station (MS), Mobile Subscriber Station (MSS).

In a hardware configuration, the embodiments of the present disclosure may be achieved by one or more application specific integrated circuits (ASICs), digital signal processors (DSPs), digital signal processing devices (DSPDs), programmable logic devices (PLDs), field programmable gate arrays (FPGAs), processors, controllers, microcontrollers, microprocessors, etc.

In a firmware or software configuration, a method according to embodiments of the present disclosure may be implemented in the form of a module, a procedure, a function, etc. Software code may be stored in a memory unit and executed by a processor. The memory unit is located at the interior or exterior of the processor and may transmit and receive data to and from the processor via various known means.

As described before, a detailed description has been given of preferred embodiments of the present disclosure so that those skilled in the art may implement and perform the present disclosure. While reference has been made above to the preferred embodiments of the present disclosure, those skilled in the art will understand that various modifications and alterations may be made to the present disclosure within the scope of the present disclosure.

### INDUSTRIAL APPLICABILITY

The above-described embodiments of the present disclosure are applicable to various mobile communication systems.

## Claims

1. A method comprising:
receiving configuration information for connected mode discontinuous reception (C-DRX) from a base station (BS);
detecting first downlink control information (DCI) including wake-up indication information; and
based on a result of detecting the first DCI, determining whether to monitor second DCI related to cell DRX or cell discontinuous transmission (DTX) in an inactive period configured through the configuration information.

2. The method of claim 1, wherein based on a wake-up operation being performed as a preset default operation due to non-detection of the first DCI, the monitoring of the second DCI is performed in the inactive period.

3. The method of claim 1, wherein based on a sleep operation being performed as a preset default operation due to non-detection of the first DCI, the monitoring of the second DCI is not performed in the inactive period.

4. The method of claim 1, wherein based on the first DCI including the wake-up indication information having a bit value related to wake-up being detected, the monitoring of the second DCI is performed in the inactive period.

5. The method of claim 1, wherein based on the first DCI including the wake-up indication information having a bit value related to sleep being detected, the monitoring of the second DCI is not performed in the inactive period.

6. The method of claim 5, wherein the monitoring of the second DCI is performed only in an onDuration for which sleep is indicated by the first DCI.

7. The method of claim 1, wherein the wake-up indication information includes a first bit value indicating starting of a drx-onDurationTimer for a next DRX cycle or a second bit value indicating that the drx-onDurationTimer for the next DRX cycle does not start.

8. The method of claim 1, wherein the second DCI format further includes a conditional handover (CHO) triggering bit indicating whether to trigger CHO.

9. The method of claim 1, wherein the first DCI is DCI format 2_6, and the second DCI is DCI format 2_9.

10. A computer-readable recording medium recording a program for performing the method of claim 1.

11. A user equipment (UE) comprising:
a radio frequency (RF) transceiver; and
a processor connected to the RF transceiver,
wherein the processor controls the RF transceiver to receive configuration information for connected mode discontinuous reception (C-DRX) from a base station (BS), detects first downlink control information (DCI) including wake-up indication information, and based on a result of detecting the first DCI, determines whether to monitor second DCI related to cell DRX or cell discontinuous transmission (DTX) in an inactive period configured through the configuration information.

12. The UE of claim 11, wherein based on a wake-up operation being performed as a preset default operation due to non-detection of the first DCI, the monitoring of the second DCI is performed in the inactive period.

13. The UE of claim 11, wherein based on a sleep operation being performed as a preset default operation due to non-detection of the first DCI, the monitoring of the second DCI is not performed in the inactive period.

14. A processing device for controlling a user equipment (UE), comprising:
at least one processor; and
at least one memory connected to the at least one processor and storing instructions that, based on being executed by the at least one processor, cause the UE to:
receive configuration information for connected mode discontinuous reception (C-DRX) from a base station (BS);
detect first downlink control information (DCI) including wake-up indication information; and
based on a result of detecting the first DCI, determine whether to monitor second DCI related to cell DRX or cell discontinuous transmission (DTX) in an inactive period configured through the configuration information.

15. A method comprising:
transmitting configuration information for connected mode discontinuous reception (C-DRX) to a user equipment (UE);
and
based on whether first downlink control information (DCI) including wake-up indication information is transmitted, determining whether to transmit second DCI related to cell DRX or cell discontinuous transmission (DTX) in an inactive period configured for the UE through the configuration information.
